# EUROPEAN PATENT SPECIFICATION

(11) **EP 2 748 977 B1**
(45) Date of publication and mention of the grant of the patent: **27.02.2019**
(21) Application number: 12843934.6
(22) Date of filing: 25.10.2012
(51) Int. Cl.: H04L 12/715, H04L 12/751, H04L 12/28

(54) **CHASSIS CONTROLLERS FOR CONVERTING UNIVERSAL FLOWS**
CHASSISSTEUERUNGEN ZUR UMWANDLUNG UNIVERSELLER STRÖMUNGEN
CONTRÔLEURS DE CHÂSSIS DESTINÉS À CONVERTIR DES FLUX UNIVERSELS

(30) Priority: 25.10.2011 US 201161551425 P; 25.10.2011 US 201161551427 P; 18.12.2011 US 201161577085 P; 04.02.2012 US 201261595027 P; 17.02.2012 US 201261599941 P; 13.03.2012 US 201261610135 P; 16.05.2012 US 201261647516 P; 17.08.2012 US 201213589078; 17.08.2012 US 201213589077; 17.08.2012 US 201261684693 P
(43) Date of publication of application: 02.07.2014
(73) Proprietor: Nicira Inc., Palo Alto, CA 94304 (US)
(72) Inventor: KOPONEN, Teemu, San Francisco, CA 94107 (US); THAKKAR, Pankaj, Santa Clara, CA 95051 (US)
(74) Representative: Appleyard Lees IP LLP
(86) International application number: PCT/US2012/062005
(87) International publication number: WO 2013/063330

(56) References cited:
- WO-A1-2010/103909
- US-A1- 2006 026 225
- US-A1- 2006 092 976
- US-A1- 2007 239 944
- US-A1- 2010 153 554
- US-A1- 2012 120 964
- US-B2- 7 343 410
- NATALIA C FERNANDES ET AL: "Virtual networks: isolation, performance, and trends", ANNALS OF TELECOMMUNICATIONS - ANNALES DES TÃ CR LÃ CR COMMUNICATIONS, SPRINGER-VERLAG, PARIS, vol. 66, no. 5 - 6, 7 October 2010 (2010-10-07), pages 339-355, XP019906083, ISSN: 1958-9395, DOI: 10.1007/S12243-010-0208-9

## Description

### BACKGROUND

Many current enterprises have large and sophisticated networks comprising switches, hubs, routers, servers, workstations and other networked devices, which support a variety of connections, applications and systems. The increased sophistication of computer networking, including virtual machine migration, dynamic workloads, multi-tenancy, and customer specific quality of service and security configurations require a better paradigm for network control. Networks have traditionally been managed through low-level configuration of individual components. Network configurations often depend on the underlying network: for example, blocking a user's access with an access control list ("ACL") entry requires knowing the user's current IP address. More complicated tasks require more extensive network knowledge: forcing guest users' port 80 traffic to traverse an HTTP proxy requires knowing the current network topology and the location of each guest. This process is of increased difficulty where the network switching elements are shared across multiple users.

In response, there is a growing movement towards a new network control paradigm called Software-Defined Networking (SDN). In the SDN paradigm, a network controller, running on one or more servers in a network, controls, maintains, and implements control logic that governs the forwarding behavior of shared network switching elements on a per user basis. Making network management decisions often requires knowledge of the network state. To facilitate management decision-making, the network controller creates and maintains a view of the network state and provides an application programming interface upon which management applications may access a view of the network state.

Some of the primary goals of maintaining large networks (including both datacenters and enterprise networks) are scalability, mobility, and multi-tenancy. Many approaches taken to address one of these goals results in hampering at least one of the others. For instance, one can easily provide network mobility for virtual machines within an L2 domain, but L2 domains cannot scale to large sizes. Furthermore, retaining user isolation greatly complicates mobility. As such, improved solutions that can satisfy the scalability, mobility, and multi-tenancy goals are needed.

In the background art, WO2010/103909A1 (NEC Corp) describes a system and method using OpenFlow switches to control packet transmissions and receptions in accordance with flow entries. US2006/0092976A1 Lakshman et al describes a control plane network which is physically separate from a data plane network.

### BRIEF SUMMARY

According to the present invention there is provided a network control system according to claim 1. Additional features of the invention will be apparent from the dependent claims and the discussion herein.

Some of the described embodiments provide a network control system that allows several different logical datapath (LDP) sets to be specified for several different users through one or more shared forwarding elements without allowing the different users to control or even view each other's forwarding logic. These shared forwarding elements are referred to below as managed switching elements or managed forwarding elements as they are managed by the network control system in order to implement the LDP sets.

In some embodiments, the network control system includes one or more controllers (also called controller instances below) that allow the system to accept LDP sets from users and to configure the switching elements to implement these LDP sets. These controllers allow the system to virtualize control of the shared switching elements and the logical networks that are defined by the connections between these shared switching elements, in a manner that prevents the different users from viewing or controlling each other's LDP sets and logical networks while sharing the same switching elements.

In some embodiments, each controller instance is a device (e.g., a general-purpose computer) that executes one or more modules that transform the user input from a logical control plane (LCP) data to a logical forwarding plane (LFP) data, and then transform the LFP data to physical control plane (PCP) data. These modules in some embodiments include a control module and a virtualization module. A control module allows a user to specify and populate a logical datapath set (LDPS), while a virtualization module implements the specified LDPS by mapping the LDPS onto the physical switching infrastructure. In some embodiments, the control and virtualization modules are two separate applications, while in other embodiments they are part of the same application.

In some of the embodiments, the control module of a controller receives from a user or another source LCP data (e.g., data that describes the connections associated with a logical switching element) that describes a LDPS. The control module then converts this data to LFP data that is then supplied to the virtualization module. The virtualization module then generates the PCP data from the LFP data. The PCP data is propagated to the managed switching elements. In some embodiments, the control and virtualization modules use an nLog engine to generate LFP data from LCP data and PCP data from the LFP data.

The network control system of some embodiments uses different controllers to perform different tasks. For instance, in some embodiments, the network control system uses three types of controllers. The first controller type is an application protocol interface (API) controller. API controllers are responsible for receiving configuration data and user queries from a user through API calls and responding to the user queries. The API controllers also disseminate the received configuration data to the other controllers. As such, the API controllers of some embodiments serve as the interface between users and the network control system.

A second type of controller is a logical controller, which is responsible for implementing LDP sets by computing universal flow entries that are generic expressions of flow entries for the managed switching elements that realize the LDP sets. A logical controller in some embodiments does not interact directly with the managed switching elements, but pushes the universal flow entries to a third type of controller, a physical controller.

Physical controllers in different embodiments have different responsibilities. In some embodiments, the physical controllers generate customized flow entries from the universal flow entries and push these customized flow entries down to the managed switching elements. In other embodiments, the physical controller identifies for a particular managed, physical switching element a fourth type of controller, a chassis controller, that is responsible for generating the customized flow entries for a particular switching element, and forwards the universal flow entries it receives from the logical controller to the chassis controller. The chassis controller then generates the customized flow entries from the universal flow entries and pushes these customized flow entries to the managed switching elements. In yet other embodiments, physical controllers generate customized flow entries for some managed switching elements, while directing chassis controllers to generate such flow entries for other managed switching elements.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, Detailed Description and the Drawings is needed. Moreover, the claimed subject matters are not to be limited by the illustrative details in the Summary, Detailed Description and the Drawing, but rather are to be defined by the appended claims, because the claimed subject matters can be embodied in other specific forms without departing from the spirit of the subject matters.

### BRIEF DESCRIPTION OF THE DRAWINGS

The novel features of the invention are set forth in the appended claims. However, for purpose of explanation, several embodiments of the invention are set forth in the following figures.
**Figure 1** illustrates a virtualized network system of some embodiments of the invention.
**Figure 2** illustrates the switch infrastructure of a multi-user server hosting system.
**Figure 3** illustrates a network controller that manages edge switching elements.
**Figure 4** illustrates an example of multiple logical switching elements implemented across a set of switching elements.
**Figure 5** illustrates the propagation of the instructions to control a managed switching element through the various processing layers of the controller instances.
**Figure 6** illustrates a multi-instance, distributed network control system of some embodiments.
**Figure 7** illustrates an example of specifying a master controller instance for a switching element.
**Figure 8** illustrates an example operation of several controller instances.
**Figure 9** conceptually illustrates software architecture for an input translation application.
**Figure 10** illustrates a control application of some embodiments of the invention.
**Figure 11** illustrates a virtualization application of some embodiments of the invention.
**Figure 12** conceptually illustrates different tables in the RE output tables.
**Figure 13** illustrates a simplified view of the table mapping operations of the control and virtualization applications of some embodiments of the invention.
**Figure 14** illustrates an example of an integrated application.
**Figure 15** illustrates another example of such an integrated application.
**Figure 16** conceptually illustrates an example architecture of a network control system.
**Figure 17** conceptually illustrates an example architecture of a network control system.
**Figure 18** illustrates an example architecture for a chassis control application.
**Figure 19** illustrates an example creation of a tunnel between two managed switching elements based on universal physical control plane data.
**Figure 20** conceptually illustrates a process that some embodiments perform to generate, from universal physical control plane data, customized physical control plane data.
**Figure 21** conceptually illustrates a process that some embodiments perform to generate customized tunnel flow instructions and to send the customized instructions to a managed switching element.
**Figure 22** conceptually illustrates in seven different stages an example operation of a chassis controller that translates universal tunnel flow instructions into customized instructions.
**Figure 23** conceptually illustrates an electronic system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments of the invention provide a network control system that allows several different LDP sets to be specified for several different users through one or more shared forwarding elements without allowing the different users to control or even view each other's forwarding logic. The shared forwarding elements in some embodiments can include virtual or physical network switches, software switches (e.g., Open vSwitch), routers, and/or other switching devices, as well as any other network elements (such as load balancers, etc.) that establish connections between these switches, routers, and/or other switching devices. Such forwarding elements (e.g., physical switches or routers) are also referred to below as switching elements. In contrast to an off the shelf switch, a software forwarding element is a switching element that in some embodiments is formed by storing its switching table(s) and logic in the memory of a standalone device (e.g., a standalone computer), while in other embodiments, it is a switching element that is formed by storing its switching table(s) and logic in the memory of a device (e.g., a computer) that also executes a hypervisor and one or more virtual machines on top of that hypervisor.

These managed, shared switching elements are referred to below as managed switching elements or managed forwarding elements as they are managed by the network control system in order to implement the LDP sets. In some embodiments, the control system manages these switching elements by pushing PCP data to them, as further described below. Switching elements generally receive data (e.g., a data packet) and perform one or more processing operations on the data, such as dropping a received data packet, passing a packet that is received from one source device to another destination device, processing the packet and then passing it to a destination device, etc. In some embodiments, the PCP data that is pushed to a switching element is converted by the switching element (e.g., by a general purpose processor of the switching element) to physical forwarding plane data that specify how the switching element (e.g., how a specialized switching circuit of the switching element) processes data packets that it receives.

In some embodiments, the network control system includes one or more controllers (also called controller instances below) that allow the system to accept LDP sets from users and to configure the switching elements to implement these LDP sets. These controllers allow the system to virtualize control of the shared switching elements and the logical networks that are defined by the connections between these shared switching elements, in a manner that prevents the different users from viewing or controlling each other's LDP sets and logical networks while sharing the same managed switching elements.

In some embodiments, each controller instance is a device (e.g., a general-purpose computer) that executes one or more modules that transform the user input from a LCP to a LFP, and then transform the LFP data to PCP data. These modules in some embodiments include a control module and a virtualization module. A control module allows a user to specify and populate a LDPS, while a virtualization module implements the specified LDPS by mapping the LDPS onto the physical switching infrastructure. In some embodiments, the control and virtualization modules express the specified or mapped data in terms of records that are written into a relational database data structure. That is, the relational database data structure stores both the logical datapath input received through the control module and the physical data to which the logical datapath input is mapped by the virtualization module. In some embodiments, the control and virtualization applications are two separate applications, while in other embodiments they are part of the same application.

The above describes several examples of the network control system. Several more detailed embodiments are described below. Section I describes the network control system of some embodiments. Section II follows with a description of universal forwarding state conversion by the network control system. Section III describes an electronic system with which some embodiments of the invention are implemented.

### I. NETWORK CONTROL SYSTEM

### A. External Layers for Pushing Flows to Control Layer

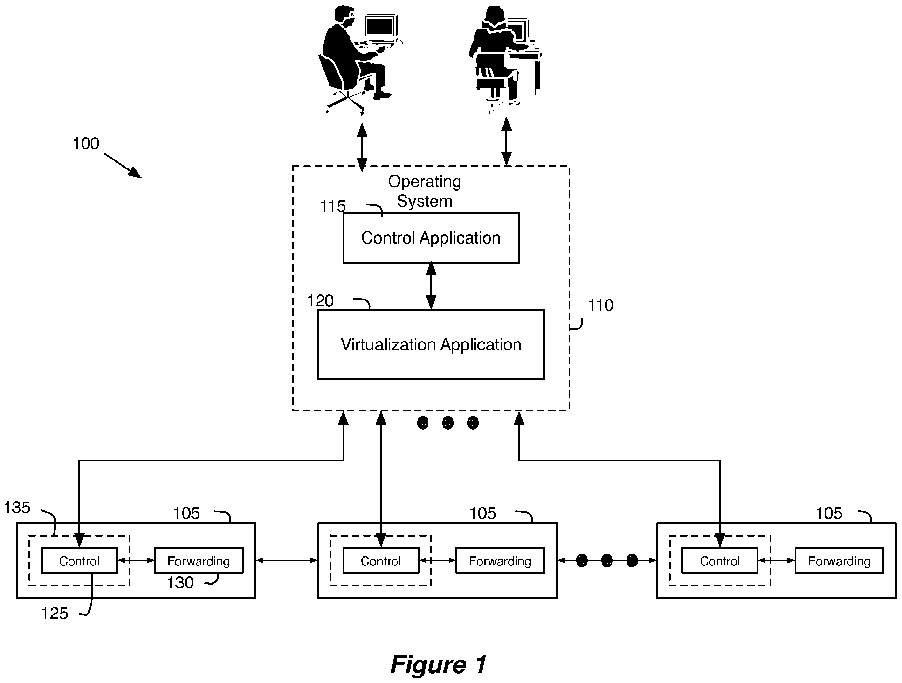

**Figure 1** illustrates a virtualized network system 100 of some embodiments of the invention. This system allows multiple users to create and control multiple different LDP sets on a shared set of network infrastructure switching elements (e.g., switches, virtual switches, software switches, etc.). In allowing a user to create and control the user's set of logical datapath (LDP) sets (i.e., the user's switching logic), the system does not allow the user to have direct access to another user's set of LDP sets in order to view or modify the other user's switching logic. However, the system does allow different users to pass packets through their virtualized switching logic to each other if the users desire such communication.

As shown in **Figure 1**, the system 100 includes one or more switching elements 105 and a network controller 110. The switching elements include N switching devices (where N is a number equal to one or greater) that form the network infrastructure switching elements of the system 100. In some embodiments, the network infrastructure switching elements includes virtual or physical network switches, software switches (e.g., Open vSwitch), routers, and/or other switching devices, as well as any other network elements (such as load balancers, etc.) that establish connections between these switches, routers, and/or other switching devices. All such network infrastructure switching elements are referred to below as switching elements or forwarding elements.

The virtual or physical switching devices 105 typically include control switching logic 125 and forwarding switching logic 130. In some embodiments, a switch's control logic 125 specifies (1) the rules that are to be applied to incoming packets, (2) the packets that will be discarded, and (3) the packet processing methods that will be applied to incoming packets. The virtual or physical switching elements 105 use the control logic 125 to populate tables governing the forwarding logic 130. The forwarding logic 130 performs lookup operations on incoming packets and forwards the incoming packets to destination addresses.

As further shown in **Figure 1**, the network controller 110 includes a control application 115 through which switching logic is specified for one or more users (e.g., by one or more administrators or users) in terms of LDP sets. The network controller 110 also includes a virtualization application 120 that translates the LDP sets into the control switching logic to be pushed to the switching devices 105. In this application, the control application and the virtualization application are referred to as "control engine" and "virtualization engine" for some embodiments.

In some embodiments, the virtualization system 100 includes more than one network controller 110. The network controllers include logical controllers that each is responsible for specifying control logic for a set of switching devices for a particular LDPS. The network controllers also include physical controllers that each pushes control logic to a set of switching elements that the physical controller is responsible for managing. In other words, a logical controller specifies control logic only for the set of switching elements that implement the particular LDPS while a physical controller pushes the control logic to the switching elements that the physical controller manages regardless of the LDP sets that the switching elements implement.

In some embodiments, the virtualization application of a network controller uses a relational database data structure to store a copy of the switch-element states tracked by the virtualization application in terms of data records (e.g., data tuples). These data records represent a graph of all physical or virtual switching elements and their interconnections within a physical network topology and their forwarding tables. For instance, in some embodiments, each switching element within the network infrastructure is represented by one or more data records in the relational database data structure. However, in other embodiments, the relational database data structure for the virtualization application stores state information about only some of the switching elements. For example, as further described below, the virtualization application in some embodiments only keeps track of switching elements at the edge of a network infrastructure. In yet other embodiments, the virtualization application stores state information about edge switching elements in a network as well as some non-edge switching elements in the network that facilitate communication between the edge switching elements.

In some embodiments, the relational database data structure is the heart of the control model in the virtualized network system 100. Under one approach, applications control the network by reading from and writing to the relational database data structure. Specifically, in some embodiments, the application control logic can (1) read the current state associated with network entity records in the relational database data structure and (2) alter the network state by operating on these records. Under this model, when a virtualization application 120 needs to modify a record in a table (e.g., a control plane flow table) of a switching element 105, the virtualization application 120 first writes one or more records that represent the table in the relational database data structure. The virtualization application then propagates this change to the switching element's table.

In some embodiments, the control application also uses the relational database data structure to store the logical configuration and the logical state for each user specified LDPS. In these embodiments, the information in the relational database data structure that represents the state of the actual switching elements accounts for only a subset of the total information stored in the relational database data structure.

In some embodiments, the control and virtualization applications use a secondary data structure to store the logical configuration and the logical state for a user specified LDPS. This secondary data structure in these embodiments serves as a communication medium between different network controllers. For instance, when a user specifies a particular LDPS using a logical controller that is not responsible for the particular LDPS, the logical controller passes the logical configuration for the particular LDPS to another logical controller that is responsible for the particular LDPS via the secondary data structures of these logical controllers. In some embodiments, the logical controller that receives from the user the logical configuration for the particular LDPS passes the configuration data to all other controllers in the virtualized network system. In this manner, the secondary storage structure in every logical controller includes the logical configuration data for all LDP sets for all users in some embodiments.

In some embodiments, an operating system (not shown) of a controller instance provides a set of different communication constructs (not shown) for the control and virtualization applications and the switching elements 105 of different embodiments. For instance, in some embodiments, the operating system provides a managed switching element with a communication interface (not shown) between (1) the switching elements 105 that perform the physical switching for any one user, and (2) the virtualization application 120 that is used to push the switching logic for the users to the switching elements. In some of these embodiments, the virtualization application manages the control switching logic 125 of a switching element through a commonly known switch-access interface that specifies a set of APIs for allowing an external application (such as a virtualization application) to control the control plane functionality of a switching element. Specifically, the managed switching element communication interface implements the set of APIs so that the virtualization application can send the records stored in the relational database data structure to the switching elements using the managed switching element communication interface.

Two examples of such known switch-access interfaces are the OpenFlow interface and the Open Virtual Switch communication interface, which are respectively described in the following two papers: McKeown, N. (2008). OpenFlow: Enabling Innovation in Campus Networks (which can be retrieved from http://www.openflowswitch.org//documents/openflow-wp-latest.pdf), and Pettit, J. (2010). Virtual Switching in an Era of Advanced Edges (which can be retrieved from http://openvswitch.org/papers/dccaves2010.pdf).

It is to be noted that for those embodiments described above and below where the relational database data structure is used to store data records, a data structure that can store data in the form of object-oriented data objects can be used alternatively or conjunctively. An example of such data structure is the NIB data structure. Several examples of using the NIB data structure are described in U.S. Patent Applications U.S. Patent Applications 13/177,529 and 13/177,533, both filed July 6, 2011.

Figure 1 conceptually illustrates the use of switch-access APIs through the depiction of halos 135 around the control switching logic 125. Through these APIs, the virtualization application can read and write entries in the control plane flow tables. The virtualization application's connectivity to the switching elements' control plane resources (e.g., the control plane tables) is implemented in-band (i.e., with the network traffic controlled by the operating system) in some embodiments, while it is implemented out-of-band (i.e., over a separate physical network) in other embodiments. There are only minimal requirements for the chosen mechanism beyond convergence on failure and basic connectivity to the operating system, and thus, when using a separate network, standard IGP protocols such as IS-IS or OSPF are sufficient.

In order to define the control switching logic 125 for switching elements when the switching elements are physical switching elements (as opposed to software switching elements), the virtualization application of some embodiments uses the Open Virtual Switch protocol to create one or more control tables within the control plane of a switching element. The control plane is typically created and executed by a general purpose CPU of the switching element. Once the system has created the control table(s), the virtualization application then writes flow entries to the control table(s) using the OpenFlow protocol. The general purpose CPU of the physical switching element uses its internal logic to convert entries written to the control table(s) to populate one or more forwarding tables in the forwarding plane of the switching element. The forwarding tables are created and executed typically by a specialized switching chip of the switching element. Through its execution of the flow entries within the forwarding tables, the switching chip of the switching element can process and route packets of data that it receives.

In some embodiments, the virtualized network system 100 includes a chassis controller in addition to logical and physical controllers. In these embodiments, the chassis controller implements the switch-access APIs to manage a particular switching element. That is, it is the chassis controller that pushes the control logic to the particular switching element. The physical controller in these embodiments functions as an aggregation point to relay the control logic from the logical controllers to the chassis controllers interfacing the set of switching elements for which the physical controller is responsible. The physical controller distributes the control logic to the chassis controllers managing the set of switching elements. In these embodiments, the managed switching element communication interface that the operating system of a network controller establishes a communication channel (e.g., a Remote Procedure Call (RPC) channel) between a physical controller and a chassis controller so that the physical controller can send the control logic stored as data records in the relational database data structure to the chassis controller. The chassis controller in turn will push the control logic to the switching element using the switch-access APIs or other protocols.

The communication constructs that the operating system of some embodiments provides also include an exporter (not shown) that a network controller can use to send data records to another network controller (e.g., from a logical controller to another logical controller, from a physical controller to another physical controller, from a logical controller to a physical controller, from a physical controller to a logical controller, etc.). Specifically, the control application and the virtualization application of a network controller can export the data records stored in the relational database data structure to one or more other network controllers using the exporter. In some embodiments, the exporter establishes a communication channel (e.g., an RPC channel) between two network controllers so that one network controller can send data records to another network controller over the channel.

The operating system of some embodiments also provides an importer that a network controller can use to receive data records from a network controller. The importer of some embodiments functions as a counterpart to the exporter of another network controller. That is, the importer is on the receiving end of the communication channel established between two network controllers. In some embodiments, the network controllers follow a publish-subscribe model in which a receiving controller subscribes to channels to receive data only from the network controllers that supply the data in which the receiving controller is interested.

### B. Pushing Flows to Edge Switching elements

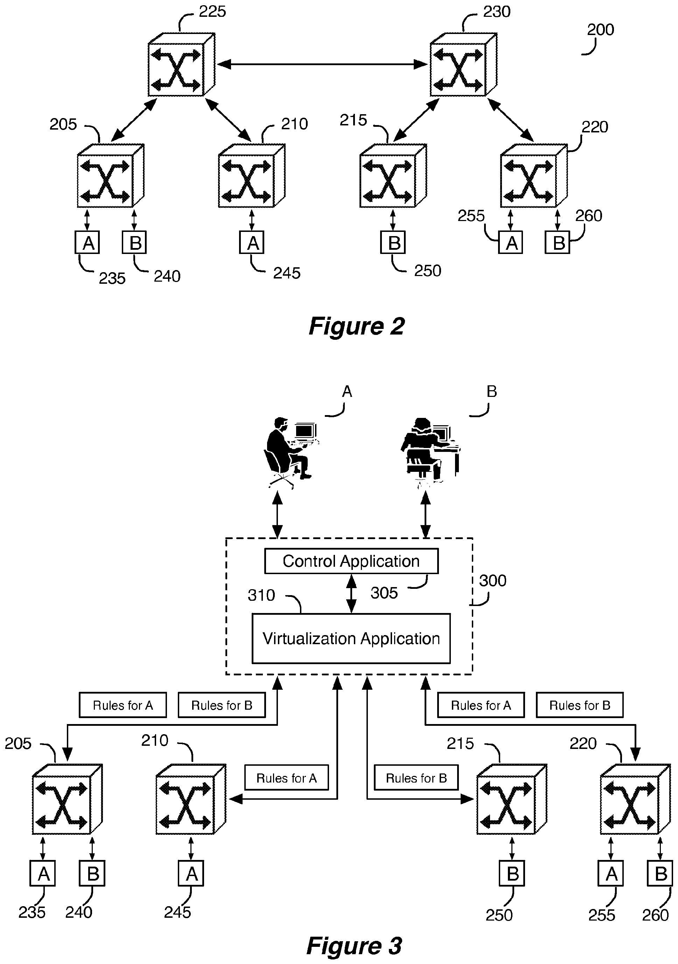

As mentioned above, the relational database data structure in some embodiments stores data regarding each switching element within the network infrastructure of a system, while in other embodiments, the relational database data structure only stores state information about switching elements at the edge of a network infrastructure. **Figures 2** and **3** illustrate an example that differentiates the two differing approaches. Specifically, **Figure 2** illustrates the switch infrastructure of a multi-user server hosting system. In this system, six switching elements are employed to interconnect six machines of two users A and B. Four of these switching elements 205-220 are edge switching elements that have direct connections with the machines 235-260 of the users A and B, while two of the switching elements 225 and 230 are interior switching elements (i.e., non-edge switching elements) that interconnect the edge switching elements and connect to each other. All the switching elements illustrated in the figures described above and below may be software switching elements in some embodiments, while in other embodiments the switching elements are mixture of software and physical switching elements. For instance, the edge switching elements 205-220 as well as the non-edge switching elements 225-230 are software switching elements in some embodiments. Also, "machines" described in this application include virtual machines and physical machines such as computing devices.

**Figure 3** illustrates a network controller 300 that manages the edge switching elements 205-220. The network controller 300 is similar to the network controller 110 described above by reference to **Figure 1**. As shown in **Figure 3**, the controller 300 includes a control application 305 and a virtualization application 310. The operating system for the controller instance 300 maintains a relational database data structure (not shown), which contains data records regarding only the edge switching elements 205-220. In addition, the applications 305 and 310 running on top of the operating system allow the users A and B to modify their switching element configurations for the edge switching elements that they use. The network controller 300 then propagates these modifications, if needed, to the edge switching elements. Specifically, in this example, two edge switching elements 205 and 220 are used by machines of both users A and B, while edge switching element 210 is only used by the machine 245 of the user A and edge switching element 215 is only used by the machine 250 of the user B. Accordingly, **Figure 3** illustrates the network controller 300 modifying users A and B records in switching elements 205 and 220, but only updating user A records in switching element 210 and only user B records in switching element 215.

The controller 300 of some embodiments only controls edge switching elements (i.e., only maintains data in the relational database data structure regarding edge switching elements) for several reasons. Controlling edge switching elements provides the controller with a sufficient mechanism for maintaining isolation between machines (e.g., computing devices), which is needed, as opposed to maintaining isolation between all switching elements, which is not needed. The interior switching elements forward data packets between switching elements. The edge switching elements forward data packets between machines and other network elements (e.g., other switching elements). Thus, the controller can maintain user isolation simply by controlling the edge switching element because the edge switching element is the last switching element in line to forward packets to a machine.

In addition to controlling edge switching elements, the network controller of some embodiments also utilizes and controls non-edge switching elements that are inserted in the switch network hierarchy to simplify and/or facilitate the operation of the controlled edge switching elements. For instance, in some embodiments, the controller requires the switching elements that it controls to be interconnected in a hierarchical switching architecture that has several edge switching elements as the leaf nodes and one or more non-edge switching elements as the non-leaf nodes. In some such embodiments, each edge switching element connects to one or more of the non-leaf switching elements, and uses such non-leaf switching elements to facilitate its communication with other edge switching elements.

The above discussion relates to the control of edge switching elements and non-edge switching elements by a network controller of some embodiments. In some embodiments, edge switching elements and non-edge switching elements (leaf and non-leaf nodes) may be referred to as managed switching elements. This is because these switching elements are managed by the network controller (as opposed to unmanaged switching elements, which are not managed by the network controller, in the network) in order to implement LDP sets through the managed switching elements.

Network controllers of some embodiments implement a logical switching element across the managed switching elements based on the physical data and the logical data described above. A logical switching element (also referred to as " logical forwarding element") can be defined to function any number of different ways (e.g., layer 2 switching, layer 3 routing, etc.) that a switching element might function. The network controllers implement the defined logical switching element through control of the managed switching elements. In some embodiments, the network controllers implement multiple logical switching elements across the managed switching elements. This allows multiple different logical switching elements to be implemented across the managed switching elements without regard to the network topology of the network.

The managed switching elements of some embodiments can be configured to route network data based on different routing criteria. In this manner, the flow of network data through switching elements in a network can be controlled in order to implement multiple logical switching elements across the managed switching elements.

### C. Logical Switching Elements and Physical Switching Elements

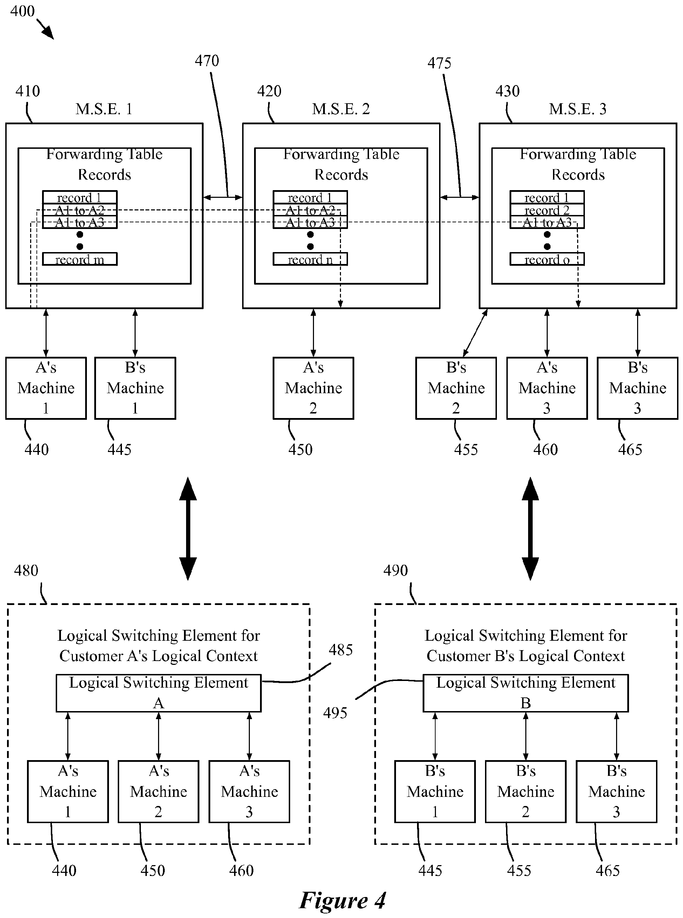

**Figure 4** illustrates an example of multiple logical switching elements implemented across a set of switching elements. In particular, **Figure 4** conceptually illustrates logical switching elements 480 and 490 implemented across managed switching elements 410-430. As shown in **Figure 4**, a network 400 includes managed switching elements 410-430 and machines 440-465. As indicated in this figure, the machines 440, 450, and 460 belong to user A and the machines 445, 455, and 465 belong to user B.

The managed switching elements 410-430 of some embodiments route network data (e.g., packets, frames, etc.) between network elements in the network that are coupled to the managed switching elements 410-430. As shown, the managed switching element 410 routes network data between the machines 440 and 445 and the switching element 420. Similarly, the switching element 420 routes network data between the machine 450 and the managed switching elements 410 and 430, and the switching element 430 routes network data between the machines 455-465 and the switching element 420.

Moreover, each of the managed switching elements 410-430 routes network data based on the switch's forwarding logic, which in some embodiments are in the form of tables. In some embodiments, a forwarding table determines where to route network data (e.g., a port on the switch) according to routing criteria. For instance, a forwarding table of a layer 2 switching element may determine where to route network data based on MAC addresses (e.g., source MAC address and/or destination MAC address). As another example, a forwarding table of a layer 3 switching element may determine where to route network data based on IP addresses (e.g., source IP address and/or destination IP address). Many other types of routing criteria are possible.

As shown in **Figure 4**, the forwarding table in each of the managed switching elements 410-430 includes several records. In some embodiments, each of the records specifies operations for routing network data based on routing criteria. The records may be referred to as flow entries in some embodiments as the records control the "flow" of data through the managed switching elements 410-430.

**Figure 4** also illustrates conceptual representations of each user's logical network. As shown, the logical network 480 of user A includes a logical switching element 485 to which user A's machines 440, 450, and 460 are coupled. User B's logical network 490 includes a logical switching element 495 to which user B's machines 445, 455, and 465 are coupled. As such, from the perspective of user A, user A has a switching element to which only user A's machines are coupled, and, from the perspective of user B, user B has a switching element to which only user B's machines are coupled. In other words, to each user, the user has its own network that includes only the user's machines.

The following will describe the conceptual flow entries for implementing the flow of network data originating from the machine 440 and destined for the machine 450 and originating from the machine 440 and destined for the machine 460. The flow entry "A1 to A2" in the managed switching element 410's forwarding table instructs the managed switching element 410 to route network data that originates from machine 410 and is destined for the machine 450 to the switching element 420. The flow entry "A1 to A2" in the forwarding table of the switching element 420 instructs the switching element 420 to route network data that originates from machine 410 and is destined for the machine 450 to the machine 450. Therefore, when the machine 440 sends network data that is destined for the machine 450, the managed switching elements 410 and 420 route the network data along datapath 470 based on the corresponding records in the switching elements' forwarding tables.

Furthermore, the flow entry "A1 to A3" in the managed switching element 410's forwarding table instructs the managed switching element 410 to route network data that originates from machine 440 and is destined for the machine 460 to the switching element 420. The flow entry "A1 to A3" in the forwarding table of the switching element 420 instructs the switching element 420 to route network data that originates from machine 440 and is destined for the machine 460 to the switching element 430. The flow entry "A1 to A3" in the forwarding table of the switching element 430 instructs the switching element 430 to route network data that originates from machine 440 and is destined for the machine 460 to the machine 460. Thus, when the machine 440 sends network data that is destined for the machine 460, the managed switching elements 410-430 route the network data along datapaths 470 and 475 based on the corresponding records in the switching elements' forwarding tables.

While conceptual flow entries for routing network data originating from the machine 440 and destined for the machine 450 and originating from the machine 440 and destined for the machine 460 are described above, similar flow entries would be included in the forwarding tables of the managed switching elements 410-430 for routing network data between other machines in user A's logical network 480. Moreover, similar flow entries would be included in the forwarding tables of the managed switching elements 410-430 for routing network data between the machines in user B's logical network 490.

The conceptual flow entries shown in **Figure 4** includes both the source and destination information for the managed switching elements to figure out the next-hop switching elements to which to send the packets. However, the source information does not have to be in the flow entries as the managed switching elements of some embodiments can figures out the next-hope switching elements using the destination information (e.g., a context identifier, a destination address, etc.) only.

In some embodiments, tunnels provided by tunneling protocols (e.g., control and provisioning of wireless access points (CAPWAP), generic route encapsulation (GRE), GRE Internet Protocol Security (IPsec), etc.) may be used to facilitate the implementation of the logical switching elements 485 and 495 across the managed switching elements 410-430. By tunneling, a packet is transmitted through the switches and routers as a payload of another packet. That is, a tunneled packet does not have to expose its addresses (e.g., source and destination MAC addresses) as the packet is forwarded based on the addresses included in the header of the outer packet that is encapsulating the tunneled packet. Tunneling, therefore, allows separation of logical address space from the physical address space as a tunneled packet can have addresses meaningful in the logical address space while the outer packet is forwarded/routed based on the addresses in the physical address space. In this manner, the tunnels may be viewed as the "logical wires" that connect managed switching elements in the network in order to implement the logical switching elements 485 and 495.

Configuring the switching elements in the various ways described above to implement multiple logical switching elements across a set of switching elements allows multiple users, from the perspective of each user, to each have a separate network and/or switching element while the users are in fact sharing some or all of the same set of switching elements and/or connections between the set of switching elements (e.g., tunnels, physical wires).

### II. UNIVERSAL FORWARDING STATE

### A. Layers of Controller Instance(s)

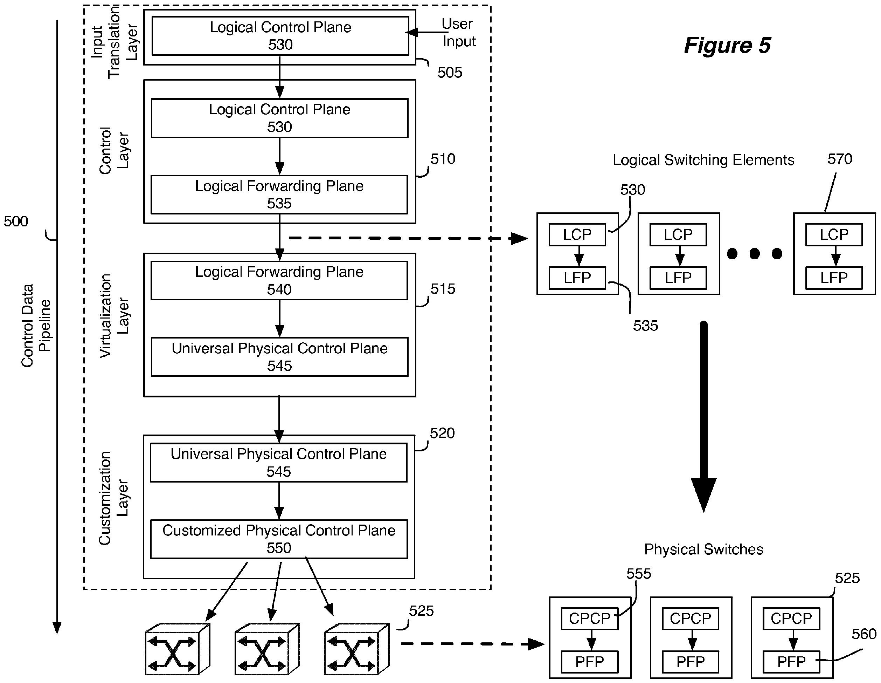

**Figure 5** illustrates the propagation of the instructions to control a managed switching element through the various processing layers of a controller instances of some embodiments of the invention. This figure illustrates a control data pipeline 500 that translates and propagates control plane data through four processing layers of the same or different controller instances to a managed switching element 525. These four layers are the input translation layer 505, the control layer 510, the virtualization layer 515, and the customization layer 520.

In some embodiments, these four layers are in the same controller instance. However, other arrangements of these layers exist in other embodiments. For instance, in other embodiments, only the control and virtualization layers 510 and 515 are in the same controller instance, but the functionality to propagate the customized physical control plane (CPCP) data reside in a customization layer of another controller instance (e.g., a chassis controller, not shown).. In these other embodiments, the universal physical control plane (UPCP) data is transferred from the relational database data structure (not shown) of one controller instance to the relational database data structure of another controller instance, before this other controller instance generates and pushes the CPCP data to the managed switching element. The former controller instance may be a logical controller that generates UPCP data and the latter controller instance may be a physical controller or a chassis controller that customizes the UPCP data in to CPCP data.

As shown in **Figure 5**, the input translation layer 505 in some embodiments has a LCP 530 that can be used to express the output of this layer. In some embodiments, an application (e.g., a web-based application, not shown) is provided to the users for the users to supply inputs specifying the LDP sets. This application sends the inputs in the form of API calls to the input translation layer 505, which translates the API calls into LCP data in a format that can be processed by the control layer 510. For instance, the inputs are translated into a set of input events that can be fed into an nLog table mapping engine of the control layer. The nLog table mapping engine and its operation be described further below.

The control layer 510 in some embodiments has the LCP 530 and the LFP 535 that can be used to express the input and output to this layer. The LCP includes a collection of higher-level constructs that allow the control layer and its users to specify one or more LDP sets within the LCP for one or more users. The LFP 535 represents the LDP sets of the users in a format that can be processed by the virtualization layer 515. In this manner, the two logical planes 530 and 535 are virtualization space analogs of the control and forwarding planes 555 and 560 that typically can be found in a typical managed switching element 525, as shown in **Figure 5**.

In some embodiments, the control layer 510 defines and exposes the LCP constructs with which the layer itself or users of the layer define different LDP sets within the LCP. For instance, in some embodiments, the LCP data 530 includes logical ACL data, etc. Some of this data (e.g., logical ACL data) can be specified by the user, while other such data (e.g., the logical L2 or L3 records) are generated by the control layer and may not be specified by the user. In some embodiments, the control layer 510 generates and/or specifies such data in response to certain changes to the relational database data structure (which indicate changes to the managed switching elements and the managed datapaths) that the control layer 510 detects.

In some embodiments, the LCP data (i.e., the LDP sets data that is expressed in terms of the control plane constructs) can be initially specified without consideration of current operational data from the managed switching elements and without consideration of the manner by which this control plane data will be translated to PCP data. For instance, the LCP data might specify control data for one logical switching element that connects five computers, even though this control plane data might later be translated to physical control data for three managed switching elements that implement the desired switching between the five computers.

The control layer includes a set of modules (not shown) for converting any LDPS within the LCP to a LDPS in the LFP 535. In some embodiments, the control layer 510 uses the nLog table mapping engine to perform this conversion. The control layer's use of the nLog table mapping engine to perform this conversion is described further below. The control layer also includes a set of modules (not shown) for pushing the LDP sets from the LFP 535 of the control layer 510 to a LFP 540 of the virtualization layer 515.

The LFP 540 includes one or more LDP sets of one or more users. The LFP 540 in some embodiments includes logical forwarding data for one or more LDP sets of one or more users. Some of this data is pushed to the LFP 540 by the control layer, while other such data are pushed to the LFP by the virtualization layer detecting events in the relational database data structure as further described below for some embodiments.

In addition to the LFP 540, the virtualization layer 515 includes a UPCP 545. The UPCP 545 includes a UPCP data for the LDP sets. The virtualization layer includes a set of modules (not shown) for converting the LDP sets within the LFP 540 to UPCP data in the UPCP 545. In some embodiments, the virtualization layer 515 uses the nLog table mapping engine to perform this conversion. The virtualization layer also includes a set of modules (not shown) for pushing the UPCP data from the UPCP 545 of the virtualization layer 515 into the relational database data structure of the customization layer 520.

In some embodiments, the UPCP data that is sent to the customization layer 515 allows managed switching element 525 to process data packets according to the LDP sets specified by the control layer 510. However, in contrast to the CPCP data, the UPCP data is not a complete implementation of the logical data specified by the control layer because the UPCP data in some embodiments does not express the differences in the managed switching elements and/or location-specific information of the managed switching elements.

The UPCP data has to be translated into the CPCP data for each managed switching element in order to completely implement the LDP sets at the managed switching elements. For instance, when the LDP sets specifies a tunnel that spans several managed switching elements, the UPCP data expresses one end of the tunnel using a particular network address (e.g., IP address) of the managed switching element representing that end. However, each of the other managed switching elements over which the tunnel spans uses a port number that is local to the managed switching element to refer to the end managed switching element having the particular network address. That is, the particular network address has to be translated to the local port number for each of the managed switching elements in order to completely implement the LDP sets specifying the tunnel at the managed switching elements.

The UPCP data as intermediate data to be translated into CPCP data enables the control system of some embodiments to scale, assuming that the customization layer 520 is running in another controller instance different than the control instance that generates the UPCP data. This is because the virtualization layer 515 does not have to convert the LFP data specifying the LDP sets to CPCP data for each of the managed switching elements that implements the LDP sets. Instead, the virtualization layer 515 converts the LFP data to UPCP data once for all the managed switching elements that implement the LDP sets. In this manner, the virtualization application saves computational resources that it would otherwise have to spend to perform conversion of the LDP sets to CPCP data for as many times as the number of the managed switching elements that implement the LDP sets.

The customization layer 520 includes the UPCP 546 and a CPCP 550 that can be used to express the input and output to this layer. The customization layer includes a set of modules (not shown) for converting the UPCP data in the UPCP 546 into CPCP data in the CPCP 550. In some embodiments, the customization layer 520 uses the nLog table mapping engine to perform this conversion. The customization layer also includes a set of modules (not shown) for pushing the CPCP data from the CPCP 550 of the customization layer 520 into the managed switching elements 525.

The CPCP data that is pushed to each managed switching element is specific to the managed switching element. The CPCP data, even though the data is referred to as "physical" data, allows the managed switching element to perform physical switching operations in both the physical and logical data processing domains. In some embodiments, the customization layer 520 runs in a separate controller instance for each of the managed switching elements 525.

In some embodiments, the customization layer 520 does not run in a controller instance. The customization layer 515 in these embodiments resides in the managed switching elements 525. Therefore, in these embodiments, the virtualization layer 515 sends the UPCP data to the managed switching elements. Each managed switching element will customize the UPCP data into CPCP data specific to the managed switching element. In some of these embodiments, a controller daemon will be running in each managed switching element and will perform the conversion of the universal data into the customized data for the managed switching element. A controller daemon will be described further below.

In some embodiments, the customized physical control plane data that is propagated to the managed switching element 525 enables this switching element to perform physical forwarding operations on network data (e.g., packets) based on the logical values defined in the logical domain. Specifically, in some embodiments, the customized physical control plane data specify flow entries that include the logical values. These logical values include logical addresses, logical port numbers, and etc. that are used to forward the network data in the logical domain. These flow entries also map the logical values to the physical values defined in the physical domain such that the managed switching element can perform logical forwarding operations on the network data by performing physical forwarding operations based on the logical values. In this manner, the physical control plane data facilitates implementing logical switching elements across managed switching elements. Several examples of using the propagated physical control plane data to implement logical data processing in the managed switching elements is further described in U.S. Patent Application 13/177,535, filed July 6, 2011.

The control plane data that is handled by a layer of the control data pipeline 500 gets more global as the higher the layer is. That is, the logical control plane data in the control layer 510 would span the entire set of managed switching elements that implement a logical switching element defined by the logical control plane data. In contrast, the customized physical control plane data in the customization layer 520 is local and specific to each of the managed switching elements that implement the logical switching element.

### B. Multi-Controller Instances

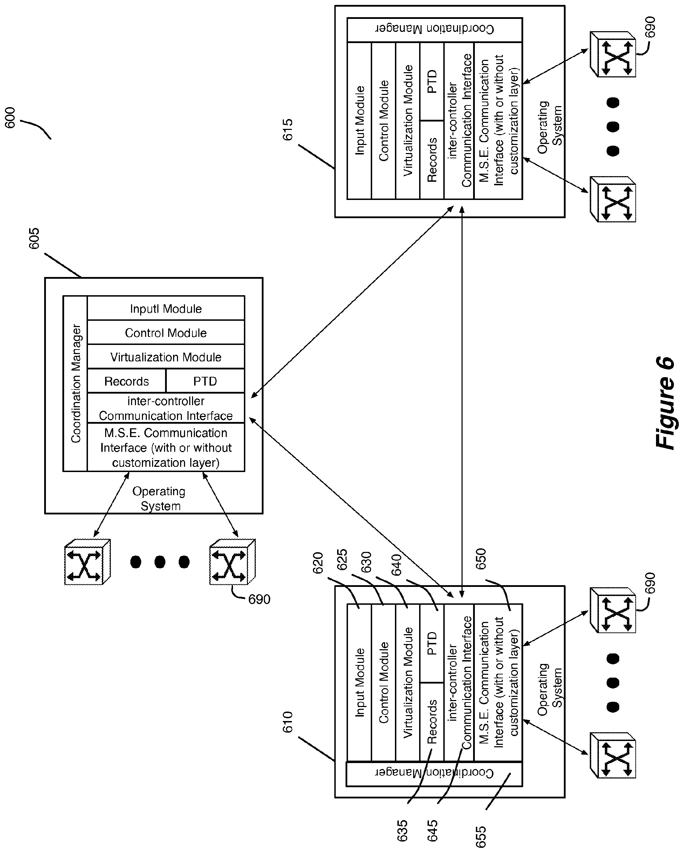

**Figure 6** illustrates a multi-instance, distributed network control system 600 of some embodiments. This distributed system controls multiple switching elements 690 with three controller instances 605, 610, and 615. In some embodiments, the distributed system 600 allows different controller instances to control the operations of the same switching element or of different switching elements. As shown in **Figure 6**, each instance includes an input module 620, a control module 625, records 635, a secondary storage structure (e.g., a PTD) 640, an inter-controller communication interface 645, a managed switching element communication interface 650.

The input module 620 of a controller instance is similar to the input translation layer 505 described above by reference to **Figure 5** in that the input module 620 takes inputs from users and translates the inputs into LCP data that the control module 625 would understand and process. As mentioned above, the inputs are in the form of API calls in some embodiments. The input module 620 sends the LCP data to the control module 625.

The control module 625 of a controller instance is similar to the control layer 510 in that the control module 625 converts the LCP data into LFP data and pushes the LFP data into the virtualization module 630. In addition, the control module 625 determines whether the received LCP data is of the LDPS that the controller instance is managing. If the controller instance is the master of the LDPS for the LCP data (i.e., a logical controller managing the LDPS), the virtualization module of the controller instance will further process the data. Otherwise, the control module 625 of some embodiments stores the LCP data in the secondary storage 640.

The virtualization module 630 of a controller instance is similar to the virtualization layer 515 in that the virtualization module 630 converts the LFP data into the UPCP data. The virtualization module 630 of some embodiments then sends the UPCP data to another controller instance through inter-controller communication interface 645 or to the managed switching elements through the managed switching element communication interface 650.

The virtualization module 630 sends the UPCP data to another instance when the other controller instance is a physical controller that is responsible for managing at least one of the managed switching elements that implement the LDPS. This is the case when the controller instance, on which the virtualization module 630 has generated the UPCP data, is just a logical controller responsible for a particular LDPS but is not a physical controller or a chassis controller responsible for the managed switching elements that implement the LDPS.

The virtualization module 630 sends the UPCP data to the managed switching elements when the managed switching elements are configured to convert the UPCP data into the CPCP data specific to the managed switching elements. In this case, the controller instance would not have a customization layer or module that would perform the conversion from the UPCP data into the CPCP data.

The records 635, in some embodiments, is a set of records stored in the relational database data structure of a controller instance. In some embodiments, some or all of the input module, the control module, and the virtualization modules use, update, and manage the records stored in the relational database data structure. That is, the inputs and/or outputs of these modules are stored in the relational database data structure.

In some embodiments, the system 600 maintains the same switching element data records in the relational database data structure of each instance, while in other embodiments, the system 600 allows the relational database data structures of different instances to store different sets of switching element data records based on the LDPS(s) that each controller instance is managing.

The PTD 640 of some embodiments is a secondary storage structure for storing user-specified network configuration data (e.g., LCP data converted from the inputs in the form of API calls). In some embodiments, the PTD of each controller instance stores the configuration data for all users using the system 600. The controller instance that receives the user input propagates the configuration data to the PTDs of other controller instances such that every PTD of every controller instance has all the configuration data for all users in these embodiments. In other embodiments, however, the PTD of a controller instance only stores the configuration data for a particular LDPS that the controller instance is managing.

By allowing different controller instances to store the same or overlapping configuration data, and/or secondary storage structure records, the system improves its overall resiliency by guarding against the loss of data due to the failure of any network controller (or failure of the relational database data structure instance and/or the secondary storage structure instance). For instance, replicating the PTD across controller instances enables a failed controller instance to quickly reload its PTD from another instance.

The inter-controller communication interface 645 is used (e.g., by an exporter, not shown) for establishing a communication channel (e.g., an RPC channel) with another controller instance. As shown, the inter-controller communication interfaces facilitate the data exchange between different controller instances 605-615.

The managed switching element communication interface 650, as mentioned above, facilitates the communication between a controller instance and a managed switching element. In some embodiments, the managed switching element communication interface is used for propagating the UPCP data generated by the virtualization module 630 to each managed switching element that is capable of converting the universal data into the customized data.

For some or all of the communications between the distributed controller instances, the system 600 uses the coordination managers (CMs) 655. The CM 655 in each instance allows the instance to coordinate certain activities with the other instances. Different embodiments use the CM to coordinate the different sets of activities between the instances. Examples of such activities include writing to the relational database data structure, writing to the PTD, controlling the switching elements, facilitating inter-controller communication related to fault tolerance of controller instances, etc. Also, CMs are used to find the masters of LDPS and the masters of managed switching elements.

As mentioned above, different controller instances of the system 600 can control the operations of the same switching elements or of different switching elements. By distributing the control of these operations over several instances, the system can more easily scale up to handle additional switching elements. Specifically, the system can distribute the management of different switching elements to different controller instances in order to enjoy the benefit of efficiencies that can be realized by using multiple controller instances. In such a distributed system, each controller instance can have a reduced number of switching elements under management, thereby reducing the number of computations each controller needs to perform to generate and distribute flow entries across the switching elements. In other embodiments, the use of multiple controller instances enables the creation of a scale-out network management system. The computation of how best to distribute network flow tables in large networks is a CPU intensive task. By splitting the processing over controller instances, the system 600 can use a set of more numerous but less powerful computer systems to create a scale-out network management system capable of handling large networks.

To distribute the workload and to avoid conflicting operations from different controller instances, the system 600 of some embodiments designates one controller instance (e.g., 605) within the system 600 as the master of a LDPS and/or any given managed switching element (i.e., as a logical controller or a physical controller). In some embodiments, each master controller instance stores in its relational database data structure only the data related to the managed switching elements, which the master is handling.

In some embodiments, as noted above, the CMs facilitate inter-controller communication related to fault tolerance of controller instances. For instance, the CMs implement the inter-controller communication through the secondary storage described above. A controller instance in the control system may fail due to any number of reasons. (e.g., hardware failure, software failure, network failure, etc.). Different embodiments may use different techniques for determining whether a controller instance has failed. In some embodiments, a consensus protocol is used to determine whether a controller instance in the control system has failed. While some of these embodiments may use Apache Zookeeper to implement the consensus protocols, other embodiments may implement the consensus protocol in other ways.

Some embodiments of the CM 655 may utilize defined timeouts to determine whether a controller instance has failed. For instance, if a CM of a controller instance does not respond to a communication (e.g., sent from another CM of another controller instance in the control system) within an amount of time (i.e., a defined timeout amount), the non-responsive controller instance is determined to have failed. Other techniques may be utilized to determine whether a controller instance has failed in other embodiments.

When a master controller instance fails, a new master for the LDP sets and the switching elements needs to be determined. Some embodiments of the CM 655 make such determination by performing a master election process that elects a master controller instance (e.g., for partitioning management of LDP sets and/or partitioning management of switching elements). The CM 655 of some embodiments may perform a master election process for electing a new master controller instance for both the LDP sets and the switching elements of which the failed controller instance was a master. However, the CM 655 of other embodiments may perform (1) a master election process for electing a new master controller instance for the LDP sets of which the failed controller instance was a master and (2) another master election process for electing a new master controller instance for the switching elements of which the failed controller instance was a master. In these cases, the CM 655 may determine two different controller instances as new controller instances: one for the LDP sets of which the failed controller instance was a master and another for the switching elements of which the failed controller instance was a master.

Alternatively or conjunctively, the controllers in the cluster of some embodiments run a consensus algorithm to determine a leader controller as mentioned above. The leader controller partitions the tasks for which each controller instance in the cluster is responsible by assigning a master controller for a particular work item, and in some cases a hot-standby controller to take over in case the master controller fails.

In some embodiments, the master election process is further for partitioning management of LDP sets and/or management of switching elements when a controller instance is added to the control system. In particular, some embodiments of the CM 655 perform the master election process when the control system 600 detects a change in membership of the controller instances in the control system 600. For instance, the CM 655 may perform the master election process to redistribute a portion of the management of the LDP sets and/or the management of the switching elements from the existing controller instances to the new controller instance when the control system 600 detects that a new network controller has been added to the control system 600. However, in other embodiments, redistribution of a portion of the management of the LDP sets and/or the management of the switching elements from the existing controller instances to the new controller instance does not occur when the control system 600 detects that a new network controller has been added to the control system 600. Instead, the control system 600 in these embodiments assigns unassigned LDP sets and/or switching elements (e.g., new LDP sets and/or switching elements or LDP sets and/or switching elements from a failed network controller) to the new controller instance when the control system 600 detects the unassigned LDP sets and/or switching elements.

### C. Partitioning Management of LDP Sets and Managed Switching Elements

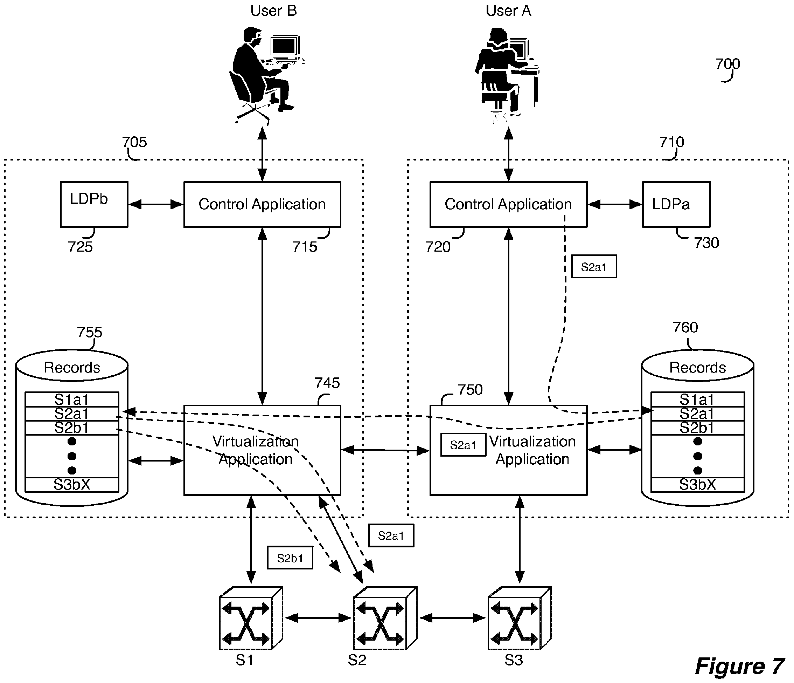

**Figure 7** illustrates an example of specifying a master controller instance for a switching element (i.e., a physical controller) in a distributed system 700 that is similar to the system 600 of **Figure 6**. In this example, two controllers 705 and 710 control three switching elements SI, S2 and S3, for two different users A and B. Through two control applications 715 and 720, the two users specify two different LDP sets 725 and 730, which are translated into numerous records that are identically stored in two relational database data structures 755 and 760 of the two controller instances 705 and 710 by virtualization applications 745 and 750 of the controllers.

In the example illustrated in **Figure 7**, both control applications 715 and 720 of both controllers 705 and 710 can modify records of the switching element S2 for both users A and B, but only controller 705 is the master of this switching element. This example illustrates two different scenarios. The first scenario involves the controller 705 updating the record S2b1 in switching element S2 for the user B. The second scenario involves the controller 705 updating the records S2a1 in switching element S2 after the control application 720 updates a record S2a1 for switching element S2 and user A in the relational database data structure 760. In the example illustrated in **Figure 7**, this update is routed from relational database data structure 760 of the controller 710 to the relational database data structure 755 of the controller 705, and subsequently routed to switching element S2.

Different embodiments use different techniques to propagate changes to the relational database data structure 760 of controller instance 710 to the relational database data structure 755 of the controller instance 705. For instance, to propagate this update, the virtualization application 750 of the controller 710 in some embodiments sends a set of records directly to the relational database data structure 755 (by using inter-controller communication modules or exporter/importer). In response, the virtualization application 745 would send the changes to the relational database data structure 755 to the switching element S2.

Instead of propagating the relational database data structure changes to the relational database data structure of another controller instance, the system 700 of some embodiments uses other techniques to change the record S2a1 in the switching element S2 in response to the request from control application 720. For instance, the distributed control system of some embodiments uses the secondary storage structures (e.g., a PTD) as communication channels between the different controller instances. In some embodiments, the PTDs are replicated across all instances, and some or all of the relational database data structure changes are pushed from one controller instance to another through the PTD storage layer. Accordingly, in the example illustrated in **Figure 7**, the change to the relational database data structure 760 could be replicated to the PTD of the controller 710, and from there it could be replicated in the PTD of the controller 705 and the relational database data structure 755.

Other variations to the sequence of operations shown in **Figure 7** could exist because some embodiments designate one controller instance as a master of a LDPS, in addition to designating a controller instance as a master of a switching element. In some embodiments, different controller instances can be masters of a switching element and a corresponding record for that switching element in the relational database data structure, while other embodiments require the controller instance to be master of the switching element and all records for that switching element in the relational database data structure.

In the embodiments where the system 700 allows for the designation of masters for switching elements and relational database data structure records, the example illustrated in **Figure 7** illustrates a case where the controller instance 710 is the master of the relational database data structure record S2a1, while the controller instance 705 is the master for the switching element S2. If a controller instance other than the controller instance 705 and 710 was the master of the relational database data structure record S2a1, then the request for the relational database data structure record modification from the control application 720 would have had to be propagated to this other controller instance. This other controller instance would then modify the relational database data structure record and this modification would then cause the relational database data structure 755 and the switching element S2 to update their records through any number of mechanisms that would propagate this modification to the controller instances 705.

In other embodiments, the controller instance 705 might be the master of the relational database data structure record S2a1, or the controller instance 705 might be the master of switching element S2 and all the records of its relational database data structure. In these embodiments, the request for the relational database data structure record modification from the control application 720 would have to be propagated to the controller instance 705, which would then modify the records in the relational database data structure 755 and the switching element S2.

As mentioned above, different embodiments employ different techniques to facilitate communication between different controller instances. In addition, different embodiments implement the controller instances differently. For instance, in some embodiments, the stack of the control application(s) (e.g., 625 or 715 in **Figures 6** and **7**) and the virtualization application (e.g., 630 or 745) is installed and runs on a single computer. Also, in some embodiments, multiple controller instances can be installed and run in parallel on a single computer. In some embodiments, a controller instance can also have its stack of components divided amongst several computers. For example, within one instance, the control application (e.g., 625 or 715) can be on a first physical or virtual machine and the virtualization application (e.g., 630 or 745) can be on a second physical or virtual machine.

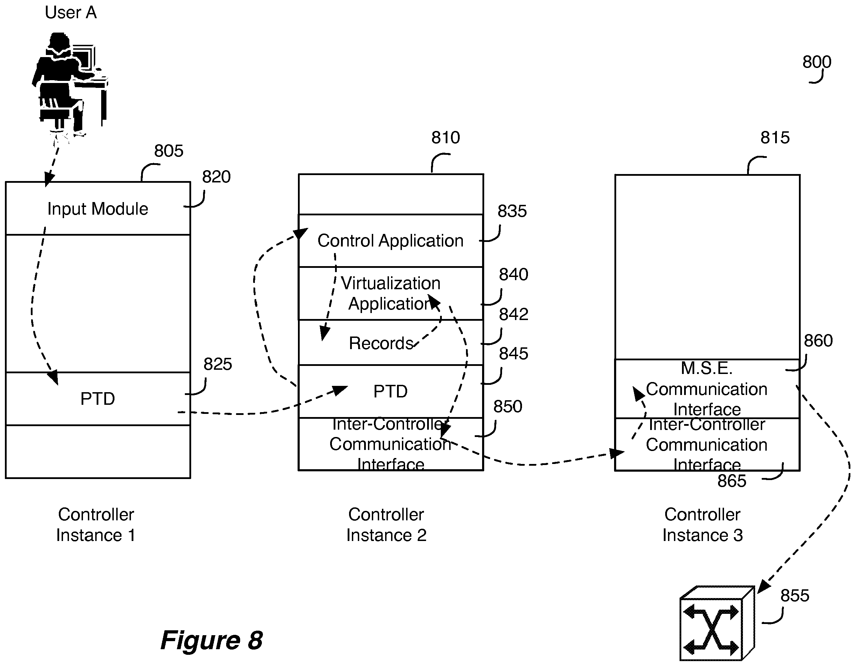

**Figure 8** illustrates an example operation of several controller instances that function as a controller for distributing inputs, a master controller of a LDPS (also referred to as a logical controller), and a master controller of a managed switching element (also referred to as a physical controller). In some embodiments, not every controller instance includes a full stack of different modules and interfaces as described above by reference to **Figure 6**. Or, not every controller instance performs every function of the full stack. For instance, none of the controller instances 805, 810, and 815 illustrated in **Figure 8** has a full stack of the modules and interfaces.

The controller instance 805 in this example is a controller instance for distributing inputs. That is, the controller instance 805 of some embodiments takes the inputs from the users in the form of API calls. Through the API calls, the users can specify requests for configuring a particular LDPS (e.g., configuring a logical switching element or a logical router to be implemented in a set of managed switching elements) or specify requests for information inquires (e.g., network traffic statistics for the logical ports of the logical switch of the user). The input module 820 of the controller instance 805 receives these API calls and translates them into the form (e.g., data tuples or records) that can be stored in a PTD 825 and sent to another controller instance in some embodiments.

The controller instance 805 in this example then sends these records to another controller instance that is responsible for managing the records of the particular LDPS. In this example, the controller instance 810 is responsible for the records of the LDPS. The controller instance 810 receives the records from the PTD 825 of the controller instance 805 and stores the records in the PTD 845, which is a secondary storage structure of the controller instance 810. In some embodiments, PTDs of different controller instances can directly exchange information each other and do not have to rely on inter-controller communication interfaces.

The control application 810 then detects the addition of these records to the PTD and processes the records to generate or modify other records in the relational database data structure 842. In particular, the control application generates LFP data. The virtualization application in turn detects the modification and/or addition of these records in the relational database data structure and modifies and/or generates other records in the relational database data structure. These other records represent the UPCP data in this example. These records then get sent to another controller instance that is managing at least one of the switching elements that implement the particular LDPS, through the inter-controller communication interface 850 of the controller instance 810.

The controller instance 815 in this example is a controller instance that is managing the switching element 855. The switching element implements at least part of the particular LDPS. The controller instance 815 receives the records representing the UPCP data from the controller instance 810 through the inter-controller communication interface 865. In some embodiments, the controller instance 815 would have a control application and a virtualization application to perform a conversion of the UPCP data to the CPCP data. However, in this example, the controller instance 815 just identifies a set of managed switching elements to which to send the UPCP data. In this manner, the controller instance 815 functions as an aggregation point to gather data to send to the managed switching elements that this controller is responsible for managing. In this example, the managed switching element 855 is one of the switching elements managed by the controller instance 815.

### D. Input Translation Layer

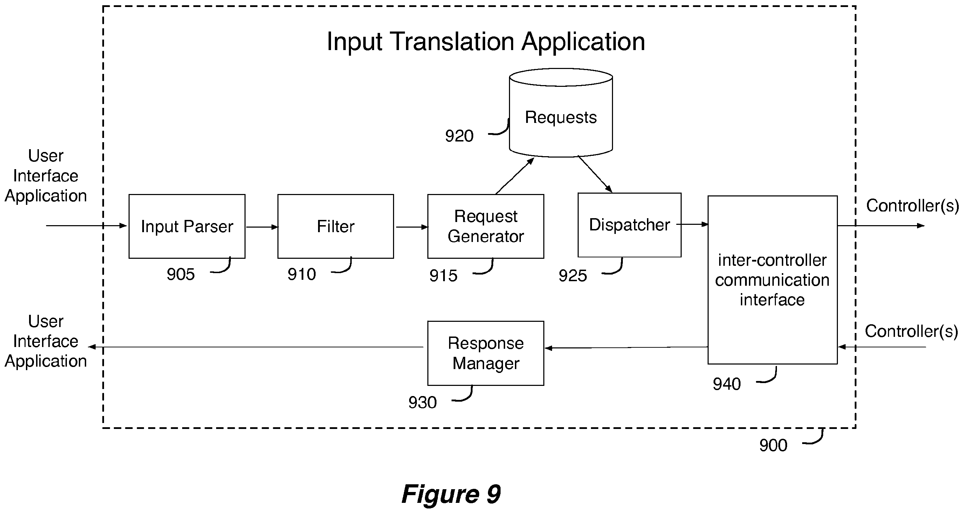

**Figure 9** conceptually illustrates software architecture for an input translation application 900. The input translation application of some embodiments functions as the input translation layer 505 described above by reference to **Figure 5**. In particular, the input translation application receives inputs from a user interface application that allows the user to enter input values. The input translation application translates inputs into requests and dispatches the requests to one or more controller instances to process the requests. In some embodiments, the input translation application runs in the same controller instance in which a control application runs, while in other embodiments the input translation application runs as a separate controller instance. As shown in this figure, the input translation application includes an input parser 905, a filter 910, a request generator 915, a requests repository 920, a dispatcher 925, a response manager 930, and an inter-controller communication interface 940.

In some embodiments, the input translation application 900 supports a set of API calls for specifying LDP sets and information inquires. In these embodiments, the user interface application that allows the user to enter input values is implemented to send the inputs in the form of API calls to the input translation application 900. These API calls therefore specify the LDPS (e.g., logical switching element configuration specified by the user) and/or the user's information inquiry (e.g., network traffic statistics for the logical ports of the logical switching element of the user). Also, the input translation application 900 may get inputs from logical controllers, physical controllers, and/or another input translation application of another controller instance in some embodiments.

The input parser 905 of some embodiments receives inputs in the form of API calls from the user interface application. In some embodiments, the input parser extracts the user input values from the API calls and passes the input values to the filter 910. The filter 910 filters out the input values that do not conform to certain requirements. For instance, the filter 910 filters out the input values that specify an invalid network address for a logical port. For those API calls that contain non-conforming input values, the response manager 930 sends a response to the user indicating the inputs are not conforming.

The request generator 915 generates requests to be sent to one or more controller instances, which will process requests to produce responses to the requests. These requests may contain the LDPS data for the receiving controller instances to process and/or information inquires. For instance, a request may ask for statistical information of a logical port of a logical switching element that the user is managing. The response to this request would include the requested statistical information prepared by a controller instance that is responsible for managing the LDPS associated with the logical switching element.

The request generator 915 of different embodiments generates requests according to different formats, depending on the implementation of the controller instances that receive and process the requests. For instance, the requests that the request generator 915 of some embodiments generates are in the form of records (e.g., data tuples) suitable for storing in the relational database data structures of controller instances that receives the requests. In some of these embodiments, the receiving controller instances use an nLog table mapping engine to process the records representing the requests. In other embodiments, the requests are in the form of object-oriented data objects that can interact with the NIB data structures of controller instances that receive the request. In these embodiments, the receiving controller instances processes the data object directly on the NIB data structure without going through the nLog table mapping engine.

The request generator 915 of some embodiments deposits the generated requests in the requests repository 920 so that the dispatcher 925 can send the requests to the appropriate controller instances. The dispatcher 925 identifies the controller instance to which each request should be sent. In some cases, the dispatcher looks at the LDPS associated with the request and identifies a controller instance that is the master of that LDPS. In some cases, the dispatcher identifies a master of a particular switching element (i.e., a physical controller) as a controller instance to send the request when the request is specifically related to a switching element (e.g., when the request is about statistical information of a logical port that is mapped to a port of the switching element). The dispatcher sends the request to the identified controller instance. The receiving controller instances returns responses when the requests include information inquires.

The inter-controller communication interface 940 is similar to the inter-controller communication interface 645 described above by reference to **Figure 6** in that the inter-controller communication interface 940 establishes a communication channel (e.g., an RPC channel) with another controller instance over which requests can be sent. The communication channel of some embodiments is bidirectional while in other embodiments the communication channel is unidirectional. When the channel is unidirectional, the inter-controller communication interface establishes multiple channels with another controller instance so that the input translation application can send requests and receive responses over different channels.

When the receiving controller instances receive requests that specify information inquires, the controller instances process the requests and produce responses containing inquired information. The response manager 930 receives the responses from the controller instances that processed requests through the channel(s) established by the inter-controller communication interface 940. In some cases, more than one response may return for a request that was sent out. For instance, a request for statistical information from all logical ports of the logical switching element that the user is managing would return a response from each controller. The responses from multiple physical controller instances for multiple different switching elements whose ports are mapped to the logical ports may return to the input translation application 900, either directly to the input translation application 900 or through the master of the LDPS associated with the logical switch. In such cases, the response manager 930 of some embodiments merges those responses and sends a single merged response to the user interface application.

As mentioned above, the control application running in a controller instance converts data records representing LCP data to data records representing LFP data by performing conversion operations. Specifically, in some embodiments, the control application populates the LDPS tables (e.g., the logical forwarding tables) that are created by the virtualization application with LDP sets.

### E. nLog Engine

The controller instance in some embodiments performs its mapping operations by using the nLog table mapping engine, which uses a variation of the datalog table mapping technique. Datalog is used in the field of database management to map one set of tables to another set of tables. Datalog is not a suitable tool for performing table mapping operations in a virtualization application of a network control system as its current implementations are often slow.

Accordingly, the nLog engine of some embodiments is custom designed to operate quickly so that it can perform the real time mapping of the LDPS data tuples to the data tuples of the managed switching elements. This custom design is based on several custom design choices. For instance, some embodiments compile the nLog table mapping engine from a set of high level declaratory rules that are expressed by an application developer (e.g., by a developer of a control application). In some of these embodiments, one custom design choice that is made for the nLog engine is to allow the application developer to use only the AND operator to express the declaratory rules. By preventing the developer from using other operators (such as ORs, XORs, etc.), these embodiments ensure that the resulting rules of the nLog engine are expressed in terms of AND operations that are faster to execute at run time.

Another custom design choice relates to the join operations performed by the nLog engine. Join operations are common database operations for creating association between records of different tables. In some embodiments, the nLog engine limits its join operations to inner join operations (also called as internal join operations) because performing outer join operations (also called as external join operations) can be time consuming and therefore impractical for real time operation of the engine.

Yet another custom design choice is to implement the nLog engine as a distributed table mapping engine that is executed by several different controller instances. Some embodiments implement the nLog engine in a distributed manner by partitioning management of LDP sets. Partitioning management of the LDP sets involves specifying for each particular LDPS only one controller instance as the instance responsible for specifying the records associated with that particular LDPS. For instance, when the control system uses three switching elements to specify five LDP sets for five different users with two different controller instances, one controller instance can be the master for records relating to two of the LDP sets while the other controller instance can be the master for the records for the other three LDP sets.

Partitioning management of the LDP sets also assigns in some embodiments the table mapping operations for each LDPS to the nLog engine of the controller instance responsible for the LDPS. The distribution of the nLog table mapping operations across several nLog instances reduces the load on each nLog instance and thereby increases the speed by which each nLog instance can complete its mapping operations. Also, this distribution reduces the memory size requirement on each machine that executes a controller instance. Some embodiments partition the nLog table mapping operations across the different instances by designating the first join operation that is performed by each nLog instance to be based on the LDPS parameter. This designation ensures that each nLog instance's join operations fail and terminate immediately when the instance has started a set of join operations that relate to a LDPS that is not managed by the nLog instance. Several examples of using nLog engine are described in above-incorporated U.S. Patent Application 13/177,533.

### F. Control Layer

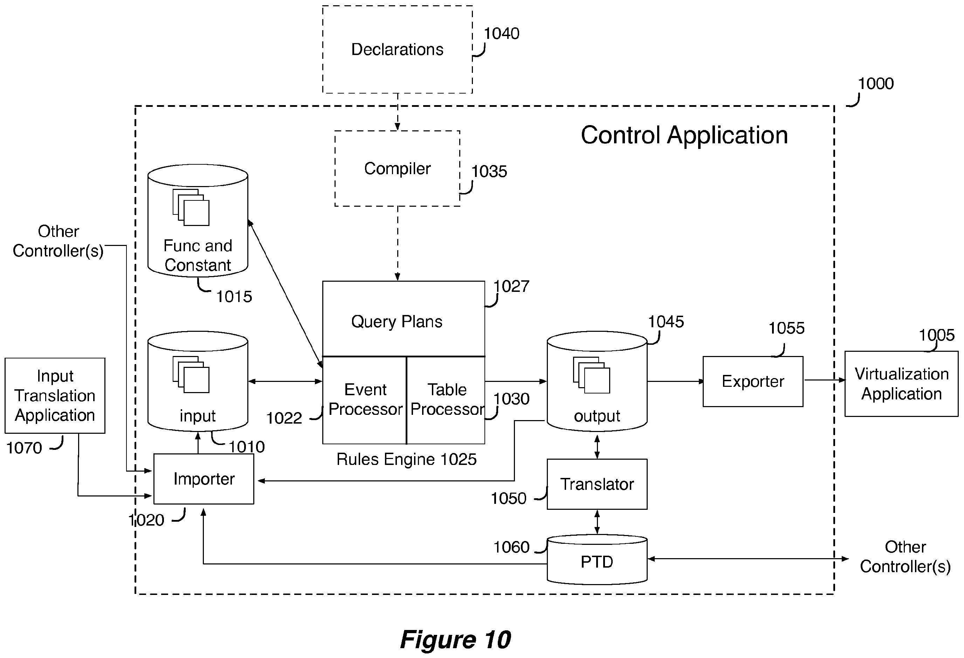

**Figure 10** illustrates a control application 1000 of some embodiments of the invention. This application 1000 is used in some embodiments as the control module 625 of **Figure 6**. This application 1000 uses an nLog table mapping engine to map input tables that contain input data tuples that represents the LCP data into data tuples that represent the LFP data. This application resides on top of a virtualization application 1005 that receives data tuples specifying LDP sets from the control application 1000. The virtualization application 1005 maps the data tuples to UPCP data.

More specifically, the control application 1000 allows different users to define different LDP sets, which specify the desired configuration of the logical switching element that the users manage. The control application 1000 through its mapping operations converts data for each LDPS of each user into a set of data tuples that specify the LFP data for the logical switching element associated with the LDPS. In some embodiments, the control application is executed on the same host on which the virtualization application 1005 is executed. The control application and the virtualization application do not have to run on the same machine in other embodiments.

As shown in **Figure 10**, the control application 1000 includes a set of rule-engine input tables 1010, a set of function and constant tables 1015, an importer 1020, a rules engine 1025, a set of rule-engine output tables 1045, a translator 1050, an exporter 1055, a PTD 1060, and a compiler 1035. The compiler 1035 is one component of the application that operates at a different instance in time than the application's other components. The compiler operates when a developer needs to specify the rules engine for a particular control application and/or virtualized environment, whereas the rest of the application's modules operate at runtime when the application interfaces with the virtualization application to deploy LDP sets specified by one or more users.

In some embodiments, the compiler 1035 takes a relatively small set (e.g., few hundred lines) of declarative instructions 1040 that are specified in a declarative language and converts these into a large set (e.g., thousands of lines) of code (i.e., object code) that specifies the operation of the rules engine 1025, which performs the application's table mapping. As such, the compiler greatly simplifies the control application developer's process of defining and updating the control application. This is because the compiler allows the developer to use a high level programming language that allows a compact definition of the control application's complex mapping operation and to subsequently update this mapping operation in response to any number of changes (e.g., changes in the logical networking functions supported by the control application, changes to desired behavior of the control application, etc.). Moreover, the compiler relieves the developer from considering the order at which the events would arrive at the control application, when the developer is defining the mapping operation.

In some embodiments, the rule-engine (RE) input tables 1010 include tables with logical data and/or switching configurations (e.g., access control list configurations, private virtual network configurations, port security configurations, etc.) specified by the user and/or the control application. The input tables 1010 also include tables that contain physical data from the switching elements managed by the network control system in some embodiments. In some embodiments, such physical data includes data regarding the managed switching elements and other data regarding network configuration employed by the network control system to deploy the different LDP sets of the different users.

The RE input tables 1010 are partially populated with LCP data provided by the users. The RE input tables 1010 also contain the LFP data and UPCP data. In addition to the RE input tables 1010, the control application 1000 includes other miscellaneous tables 1015 that the rules engine 1025 uses to gather inputs for its table mapping operations. These tables 1015 include constant tables that store defined values for constants that the rules engine 1025 needs to perform its table mapping operations. For instance, the constant tables 1015 may include a constant "zero" that is defined as the value 0, a constant "dispatch_port_no" as the value 4000, and a constant "broadcast_MAC_addr" as the value 0xFF:FF:FF:FF:FF:FF.

When the rules engine 1025 references constants, the corresponding value defined for the constants are actually retrieved and used. In addition, the values defined for constants in the constant tables 1015 may be modified and/or updated. In this manner, the constant tables 1015 provide the ability to modify the value defined for constants that the rules engine 1025 references without the need to rewrite or recompile code that specifies the operation of the rules engine 1025. The tables 1015 further include function tables that store functions that the rules engine 1025 needs to use to calculate values needed to populate the output tables 1045.

The rules engine 1025 performs table mapping operations that specifies one manner for converting LCP data to LFP data. Whenever one of the rule-engine (RE) input tables is modified, the rules engine performs a set of table mapping operations that may result in the modification of one or more data tuples in one or more RE output tables.

As shown in **Figure 10**, the rules engine 1025 includes an event processor 1022, several query plans 1027, and a table processor 1030. Each query plan is a set of rules that specifies a set of join operations that are to be performed upon the occurrence of a modification to one of the RE input tables. Such a modification is referred to below as an input table event. In this example, each query plan is generated by the compiler 1035 from one declaratory rule in the set of declarations 1040. In some embodiments, more than one query plan is generated from one declaratory rule. For instance, a query plan is created for each of the tables joined by one declaratory rule. That is, when a declaratory rule specifies to join four tables, four different query plans will be created from that one declaration. In some embodiments, the query plans are defined by using the nLog declaratory language.

The event processor 1022 of the rules engine 1025 detects the occurrence of each input table event. The event processor of different embodiments detects the occurrence of an input table event differently. In some embodiments, the event processor registers for callbacks with the RE input tables for notification of changes to the records of the RE input tables. In such embodiments, the event processor 1022 detects an input table event when it receives notification from an RE input table that one of its records has changed.

In response to a detected input table event, the event processor 1022 (1) selects the appropriate query plan for the detected table event, and (2) directs the table processor 1030 to execute the query plan. To execute the query plan, the table processor 1030, in some embodiments, performs the join operations specified by the query plan to produce one or more records that represent one or more sets of data values from one or more input and miscellaneous tables 1010 and 1015. The table processor 1030 of some embodiments then (1) performs a select operation to select a subset of the data values from the record(s) produced by the join operations, and (2) writes the selected subset of data values in one or more RE output tables 1045.

In some embodiments, the RE output tables 1045 store both logical and physical network element data attributes. The tables 1045 are called RE output tables as they store the output of the table mapping operations of the rules engine 1025. In some embodiments, the RE output tables can be grouped in several different categories. For instance, in some embodiments, these tables can be RE input tables and/or control-application (CA) output tables. A table is an RE input table when a change in the table causes the rules engine to detect an input event that requires the execution of a query plan. A RE output table 1045 can also be an RE input table 1010 that generates an event that causes the rules engine to perform another query plan. Such an event is referred to as an internal input event, and it is to be contrasted with an external input event, which is an event that is caused by an RE input table modification made by the control application 1000 or the importer 1020.

A table is a CA output table when a change in the table causes the exporter 1055 to export a change to the virtualization application 1005, as further described below. A table in the RE output tables 1045 can be an RE input table, a CA output table, or both an RE input table and a CA output table in some embodiments.

The exporter 1055 detects changes to the CA output tables of the RE output tables 1045. The exporter of different embodiments detects the occurrence of a CA output table event differently. In some embodiments, the exporter registers for callbacks with the CA output tables for notification of changes to the records of the CA output tables. In such embodiments, the exporter 1055 detects an output table event when it receives notification from a CA output table that one of its records has changed.

In response to a detected output table event, the exporter 1055 takes some or all of modified data tuples in the modified CA output tables and propagates this modified data tuple(s) to the input tables (not shown) of the virtualization application 1005. In some embodiments, instead of the exporter 1055 pushing the data tuples to the virtualization application, the virtualization application 1005 pulls the data tuples from the CA output tables 1045 into the input tables of the virtualization application. In some embodiments, the CA output tables 1045 of the control application 1000 and the input tables of the virtualization 1005 may be identical. In yet other embodiments, the control and virtualization applications use one set of tables, so that the CA output tables are essentially virtualization application (VA) input tables.

In some embodiments, the control application does not keep in the output tables 1045 the data for LDP sets that the control application is not responsible for managing. However, such data will be translated by the translator 1050 into a format that can be stored in the PTD and gets stored in the PTD. The PTD of the control application 1000 propagates this data to one or more other control application instances of other controller instances so that some of other controller instances that are responsible for managing the LDP sets associated with the data can process the data.

In some embodiments, the control application also brings the data stored in the output tables 1045 (i.e., the data that the control application keeps in the output tables) to the PTD for resiliency of the data. Such data is also translated by the translator 1050, stored in the PTD, and propagated to other control application instances of other controller instances. Therefore, in these embodiments, a PTD of a controller instance has all the configuration data for all LDP sets managed by the network control system. That is, each PTD contains the global view of the configuration of the logical network in some embodiments.

The importer 1020 interfaces with a number of different sources of input data and uses the input data to modify or create the input tables 1010. The importer 1020 of some embodiments receives the input data from the input translation application 1070 through the inter-controller communication interface (not shown). The importer 1020 also interfaces with the PTD 1060 so that data received through the PTD from other controller instances can be used as input data to modify or create the input tables 1010. Moreover, the importer 1020 also detects changes with the RE input tables and the RE input tables & CA output tables of the RE output tables 1045.

### G. Virtualization Layer

As mentioned above, the virtualization application of some embodiments specifies the manner by which different LDP sets of different users of a network control system can be implemented by the switching elements managed by the network control system. In some embodiments, the virtualization application specifies the implementation of the LDP sets within the managed switching element infrastructure by performing conversion operations. These conversion operations convert the LDP sets data records to the control data records (e.g., UPCP data) that are initially stored within the managed switching elements and then used by the switching elements to produce forwarding plane data (e.g., flow entries) for defining forwarding behaviors of the switching elements. The conversion operations also produce other data (e.g., in tables) that specify network constructs (e.g., tunnels, queues, queue collections, etc.) that should be defined within and between the managed switching elements. The network constructs also include managed software switching elements that are dynamically deployed or pre-configured managed software switching elements that are dynamically added to the set of managed switching elements.

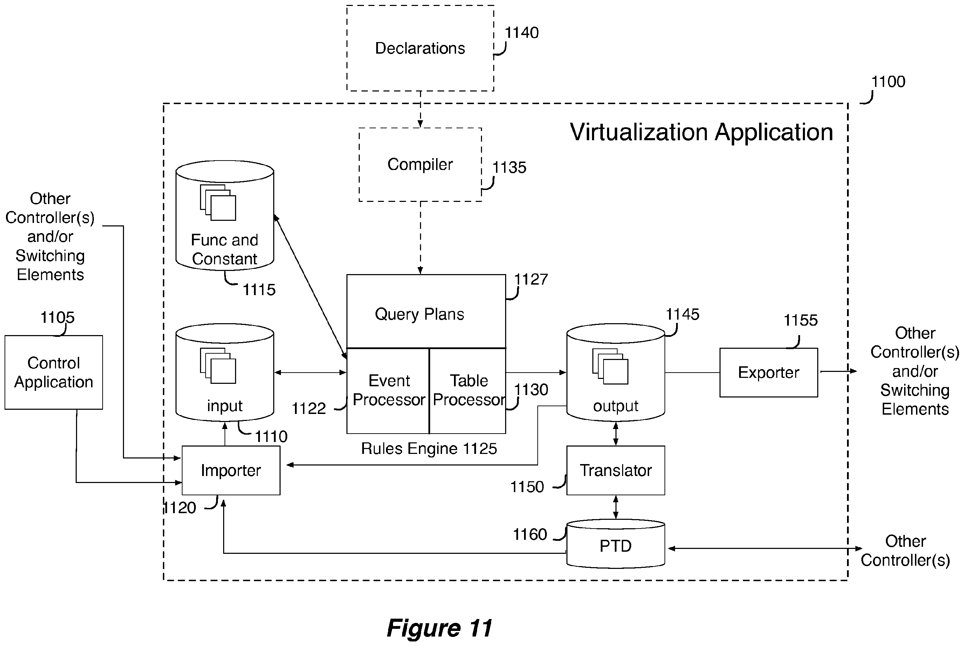

**Figure 11** illustrates a virtualization application 1100 of some embodiments of the invention. This application 1100 is used in some embodiments as the virtualization module 630 of **Figure 6**. The virtualization application 1100 uses an nLog table mapping engine to map input tables that contain LDPS data tuples that represent UPCP data. This application resides below a control application 1105 that generates LDPS data tuples. The control application 1105 is similar to the control application 1000 described above by reference to **Figure 10**. The virtualization application 1100 is similar to the virtualization application 1005.

As shown in **Figure 11**, the virtualization application 1100 includes a set of rule-engine input tables 1110, a set of function and constant tables 1115, an importer 1120, a rules engine 1125, a set of rule-engine output tables 1145, a translator 1150, an exporter 1155, a PTD 1160, and a compiler 1135. The compiler 1135 is similar to the compiler 1035 described above by reference to **Figure 10**.

In order for the virtualization application 1100 to map the LDPS data tuples to UPCP data tuples, the developer in some embodiments specifies in a declarative language the declarative instructions 1140 which include the instructions for mapping the LDPS data tuples to UPCP data tuples for some managed switching elements. In some such embodiments, these switching elements include UPCPs to convert the UPCP data to the CPCP data.

For other managed switching elements, the virtualization application 1100 maps the LDPS data tuples to CPCP data tuples that are specific to each managed switching element that does not have UPCPs. In some embodiments, when the virtualization application 1100 receives UPCP data from the virtualization application of another controller instance, the virtualization application 1100 further maps the UPCP data tuples in the output tables 1140 to the CPCP data tuples for some managed switching element that does not have UPCPs to convert the universal physical control plane data tuples to the physical datapath set data tuples.

In some embodiments, when there is a chassis controller to convert the UPCP tuples into the CPCP data specific to a particular managed switching element, the virtualization application 1100 does not convert input UPCP data into CPCP data for the particular managed switching element. In these embodiments, the controller instance that has the virtualization application 1100 identifies a set of managed switching elements of which the controller instance is the master and distributes the UPCP data to the set of managed switching elements.

The RE input tables 1110 are similar to the RE input tables 1010. In addition to the RE input tables 1110, the virtualization application 1100 includes other miscellaneous tables 1115 that the rules engine 1125 uses to gather inputs for its table mapping operations. These tables 1115 are similar to the tables 1015. As shown in **Figure 11**, the rules engine 1125 includes an event processor 1122, several query plans 1127, and a table processor 1130, which function similarly as the event processor 1022, the query plans 1027, and the table process 1030 do.

In some embodiments, the RE output tables 1145 store both logical and physical network element data attributes. The tables 1145 are called RE output tables as they store the output of the table mapping operations of the rules engine 1125. In some embodiments, the RE output tables can be grouped in several different categories. For instance, in some embodiments, these tables can be RE input tables and/or virtualization-application (VA) output tables. A table is an RE input table when a change in the table causes the rules engine to detect an input event that requires the execution of a query plan. A RE output table 1145 can also be an RE input table 1110 that generates an event that causes the rules engine to perform another query plan after it is modified by the rules engine. Such an event is referred to as an internal input event, and it is to be contrasted with an external input event, which is an event that is caused by an RE input table modification made by the control application 1105 via the importer 1120.

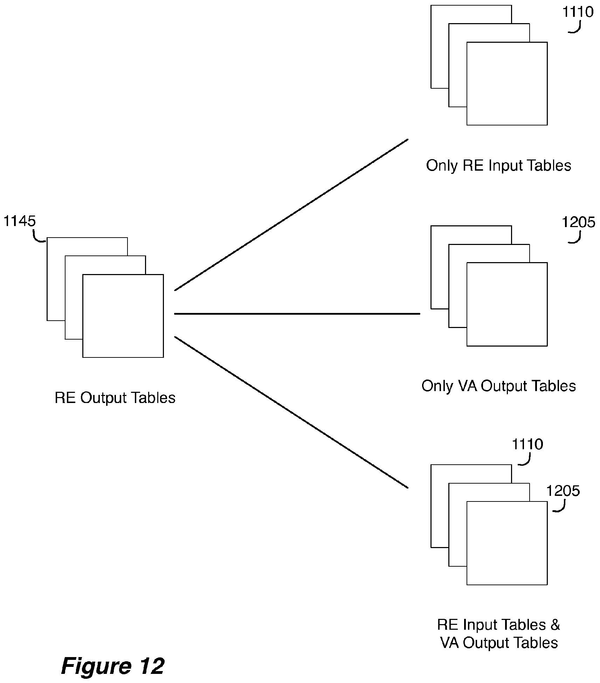

A table is a VA output table when a change in the table causes the exporter 1155 to export a change to the managed switching elements or other controller instances. As shown in **Figure 12**, a table in the RE output tables 1145 can be an RE input table 1110, a VA output table 1205, or both an RE input table 1110 and a VA output table 1205 in some embodiments.

The exporter 1155 detects changes to the VA output tables 1205 of the RE output tables 1145. The exporter of different embodiments detects the occurrence of a VA output table event differently. In some embodiments, the exporter registers for callbacks with the VA output tables for notification of changes to the records of the VA output tables. In such embodiments, the exporter 1155 detects an output table event when it receives notification from a VA output table that one of its records has changed.

In response to a detected output table event, the exporter 1155 takes each modified data tuple in the modified VA output tables and propagates this modified data tuple to one or more of other controller instances (e.g., chassis controller) or to one or more the managed switching elements. In doing this, the exporter completes the deployment of the LDPS (e.g., one or more logical switching configurations) to one or more managed switching elements as specified by the records.

As the VA output tables store both logical and physical network element data attributes in some embodiments, the PTD 1160 in some embodiments stores both logical and physical network element attributes that are identical to or derived from the logical and physical network element data attributes in the output tables 1145. In other embodiments, however, the PTD 1160 only stores physical network element attributes that are identical to or derived from the physical network element data attributes in the output tables 1145.

In some embodiments, the virtualization application does not keep in the output tables 1145 the data for LDP sets that the virtualization application is not responsible for managing. However, such data will be translated by the translator 1150 into a format that can be stored in the PTD and then gets stored in the PTD. The PTD of the virtualization application 1100 propagates this data to one or more other virtualization application instances of other controller instances so that some of other virtualization application instances that are responsible for managing the LDP sets associated with the data can process the data.

In some embodiments, the virtualization application also brings the data stored in the output tables 1145 (i.e., the data that the virtualization application keeps in the output tables) to the PTD for resiliency of the data. Such data is also translated by the translator 1150, stored in the PTD, and propagated to other virtualization application instances of other controller instances. Therefore, in these embodiments, a PTD of a controller instance has all the configuration data for all LDP sets managed by the network control system. That is, each PTD contains the global view of the configuration of the logical network in some embodiments.

The importer 1120 interfaces with a number of different sources of input data and uses the input data to modify or create the input tables 1110. The importer 1120 of some embodiments receives the input data from the input translation application 1170 through the inter-controller communication interface. The importer 1120 also interfaces with the PTD 1160 so that data received through the PTD from other controller instances can be used as input data to modify or create the input tables 1110. Moreover, the importer 1120 also detects changes with the RE input tables and the RE input tables & VA output tables of the RE output tables 1145.

### H. Network Controller

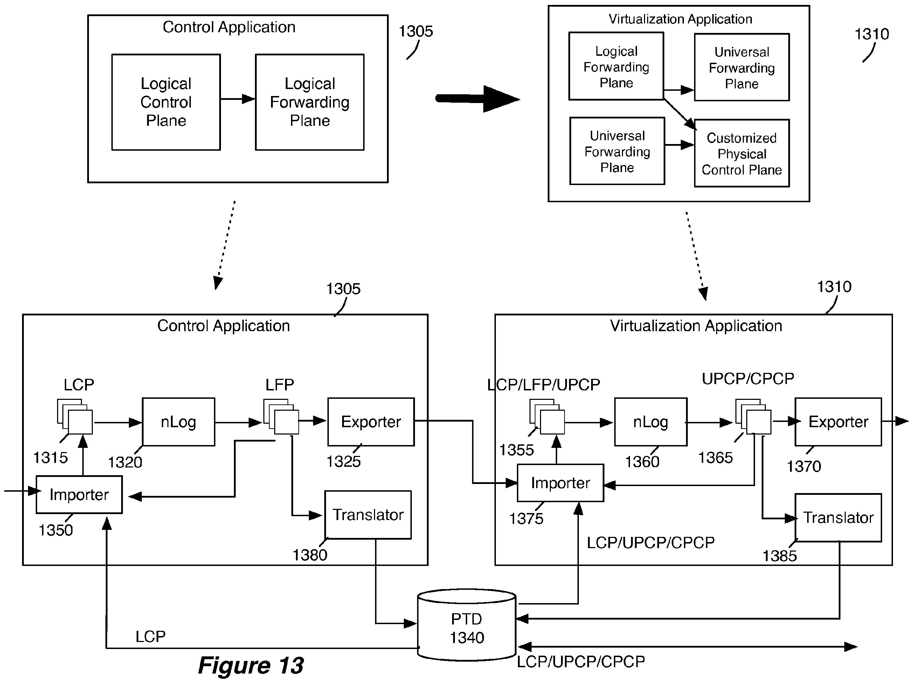

**Figure 13** illustrates a simplified view of the table mapping operations of the control and virtualization applications of some embodiments of the invention. As indicated in the top half of this figure, the control application 1305 maps LCP data to LFP data, which the virtualization application 1310 of some embodiments then maps to UPCP data or CPCP data.

The bottom half of this figure illustrates the table mapping operations of the control application and the virtualization application. As shown in this half, the control application's input tables 1315 store LCP data, LFP (LFP) data and UPCP data, as the collection of all these data along with data in the constant and function tables (not shown) is used by the control application's nLog engine 1320 in some embodiments to generate LFP data from the input LCP data.

This figure shows that the importer 1350 receives the LCP data from the user (e.g., thru an input translation application) and update input tables 1315 of the control application with the LCP data. This figure further shows that the importer 1350 detects or receives changes in the PTD 1340 (e.g., LCP data changes originated from the other controller instances) in some embodiments and in response to such changes the importer 1350 may update input tables 1315.

The bottom half of this figure also illustrates the table mapping operations of the virtualization application 1310. As shown, the virtualization application's input tables 1355 store LFP data as the LFP data along with data in the constant and function tables (not shown) is used by the virtualization application's nLog engine 1320 in some embodiments to generate UPCP data and/or CPCP data. In some embodiments, the exporter 1370 sends the generated UPCP data to one or more other controller instances (e.g., a chassis controller) to generate CPCP data before pushing this data to the managed switching elements or to one or more managed switching elements that convert the UPCP data to CPCP data specific to the managed switching elements. In other embodiments, the exporter 1370 sends the generate CPCP data to one or more managed switching elements to define the forwarding behaviors of these managed switching elements.

In some embodiments, when there is a chassis controller to convert the UPCP data into the CPCP data specific to a particular managed switching element, the virtualization application 1310 does not convert input UPCP data into CPCP data for the particular managed switching element. In these embodiments, the controller instance that has the virtualization application 1310 identifies a set of managed switching elements of which the controller instance is the master and distributes the UPCP data to the set of managed switching elements.

This figure shows that the importer 1375 receives the LFP data from the control application 1305 and update input tables 1355 of the virtualization application with the LFP data. This figure further shows that the importer 1375 detects or receives changes in the PTD 1340 (e.g., LCP data changes originated from the other controller instances) in some embodiments and in response to such changes the importer 1375 may update input tables 1355. This figure also shows that the importer 1375 may receive UPCP data from another controller instance.

As mentioned above, some of the logical or physical data that an importer pushes to the input tables of the control or virtualization application relates to data that is generated by other controller instances and passed to the PTD. For instance, in some embodiments, the logical data regarding logical constructs (e.g., logical ports, logical queues, etc.) that relates to multiple LDP sets might change, and the translator (e.g., translator 1380 of the controller instance) may write this change to the input tables. Another example of such logical data that is produced by another controller instance in a multi controller instance environment occurs when a user provides LCP data for a LDPS on a first controller instance that is not responsible for the LDPS. This change is added to the PTD of the first controller instance by the translator of the first controller instance. This change is then propagated across the PTDs of other controller instances by replication processes performed by the PTDs. The importer of a second controller instance, which is the master of the LDPS or the logical controller that is responsible for the LDPS, eventually takes this change and then writes the change to the one of the application's input tables (e.g., the control application's input table). Accordingly, the logical data that the importer writes to the input tables in some cases may originate from the PTD of another controller instance.

As mentioned above, the control application 1305 and the virtualization application 1310 are two separate applications that operate on the same machine or different machines in some embodiments. Other embodiments, however, implement these two applications as two modules of one integrated application, with the control application module 1305 generating logical data in the LFP and the virtualization application generating physical data in the UPCP or in the CPCP.

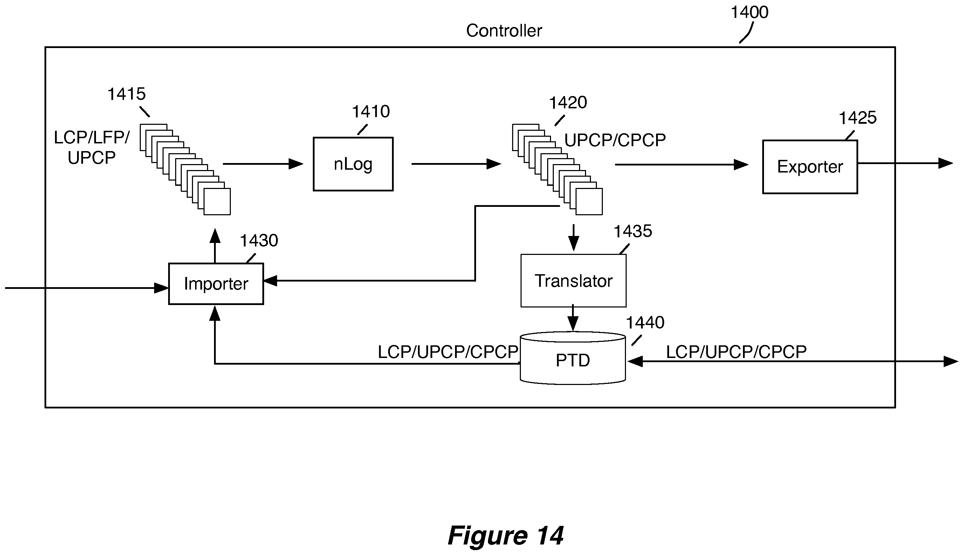

Still other embodiments integrate the control and virtualization operations of these two applications within one integrated application, without separating these operations into two separate modules. **Figure 14** illustrates an example of such an integrated application 1400. This application 1400 uses an nLog table mapping engine 1410 to map data from an input set of tables 1415 to an output set of tables 1420, which like the above described embodiments **Figures 10**, **11**, and **13**, may include one or more tables in the input set of tables. The input set of tables in this integrated application may include LCP data that need to be mapped to LFP data, or it may include LFP data that need to be mapped to CPCP or UPCP data. The input set of tables may also include UPCP data that need to be mapped to CPCP data. The UPCP data is distributed to a set of chassis controllers for a set of managed switching elements without being mapped to CPCP data. The mapping depends on whether the controller instance running the integrated application 1400 is a logical controller or a physical controller and whether the managed switching elements of the physical controller is a master have chassis controller for mapping the UPCP data to the CPCP data for the managed switching elements.

In this integrated control and virtualization application 1400, the importer 1430 gets the input data from the users or other controller instances. The importer 1430 also detects or receives the changes in the PTD 1440 that is replicated to the PTD. The exporter 1425 exports output table records to other controller instances (e.g., a chassis controller).

When sending the output table records to another controller instance, the exporter uses an inter-controller communication interface (not shown) so that the data contined in the records are sent to the other controller instance over a communication channel (e.g., an RPC channel). When sending the output table records to managed switching elements, the exporter uses a managed switching element communication interface (not shown) so that the data contained in the records are sent to a managed switching element over two channels. One channel is established using a switch control protocol (e.g., OpenFlow) for controlling the forwarding plane of the managed switching element, and the other channel is established using a configuration protocol to send configuration data.

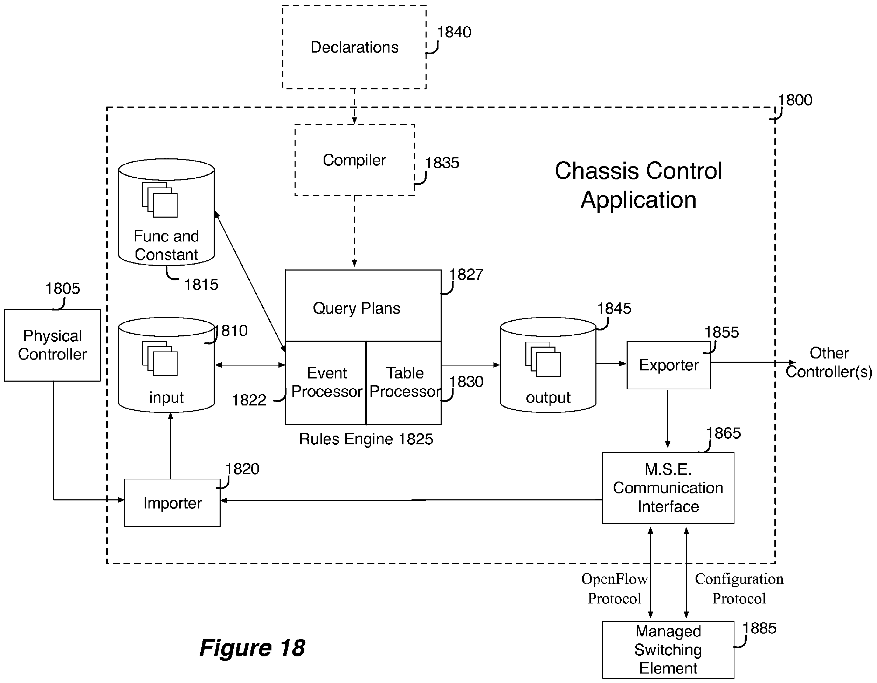

When sending the output table records to a chassis controller, the exporter 1425 in some embodiments uses a single channel of communication to send the data contained in the records. In these embodiments, the chassis controller accepts the data through this single channel but communicates with the managed switching element over two channels. A chassis controller is described in more details further below by reference to **Figure 18**.

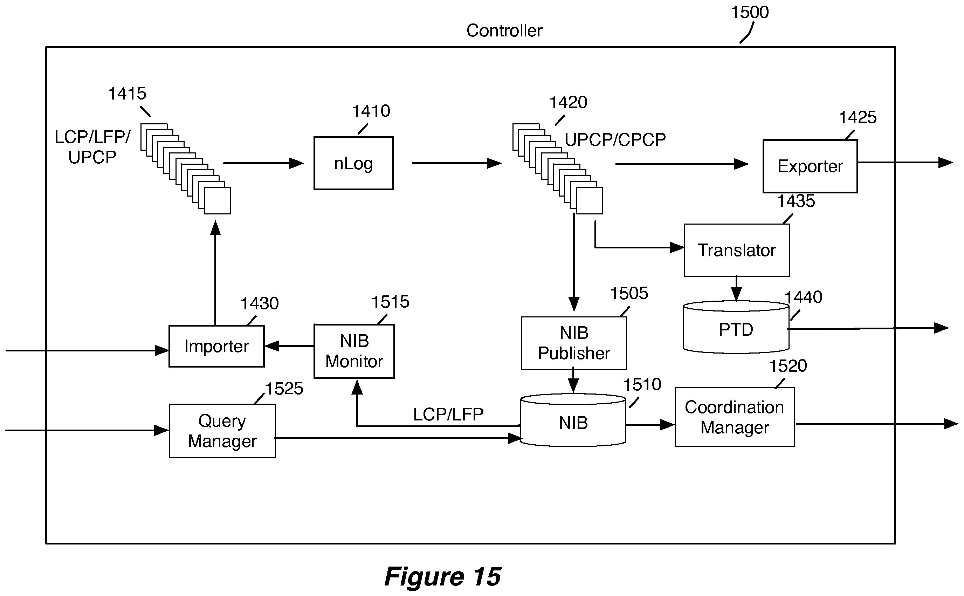

**Figure 15** illustrates another example of such an integrated application 1500. The integrated application 1500 uses a network information base (NIB) data structure 1510 to store some of the input and output data of the nLog table mapping engine 1410. As mentioned above, the NIB data structure stores data in the form of an object-oriented data objects. In the integrated application 1500, the output tables 1420 are the primary storage structure. The PTD 1440 and the NIB 1510 are the secondary storage structures.

The integrated application 1500 uses the nLog table mapping engine 1410 to map data from the input set of tables 1415 to the output set of tables 1420. In some embodiments, some of the data in the output set of tables 1420 is exported by the exporter 1425 to one or more other controller instances or one or managed switching elements. Such exported data include UPCP or CPCP data that would define flow behaviors of the managed switching elements. These data may be backed up in the PTD by the translator 1435 in the PTD 1440 for data resiliency.

Some of the data in the output set of tables 1420 is published to the NIB 1510 by the NIB publisher 1505. These data include configuration information of the logical switching elements that the users manage using the integrated application 1500. The data stored in the NIB 1510 is replicated to other NIBs of other controller instances by the coordination manager 1520.

The NIB monitor 1515 receives notifications of changes from the NIB 1510, and for some notifications (e.g., those relating to the LDP sets for which the integrated application is the master), pushes changes to the input tables 1415 via the importer 1430.

The query manager 1525 uses an inter-controller communication interface (not shown) to interface with an input translation application (not shown) to receive queries (e.g., information inquires) regarding configuration data. As shown in this figure, the manager 1525 of some embodiments also interfaces with the NIB 1510 in order to query the NIB to provide the state information (e.g., logical port statistics) regarding the logical network elements that the user is managing. In other embodiments, however, the query manager 1525 queries the output tables 1420 to obtain the state information.

In some embodiments, the application 1500 uses secondary storage structures (not shown) other than the PTD and the NIB. These structures include a persistent non-transactional database (PNTD) and a hash table. In some embodiments, these two types of secondary storage structures store different types of data, store data in different manners, and/or provide different query interfaces that handle different types of queries.

The PNTD is a persistent database that is stored on disk or other non-volatile memory. Some embodiments use this database to store data (e.g., statistics, computations, etc.) regarding one or more switching element attributes or operations. For instance, this database is used in some embodiment to store the number of packets routed through a particular port of a particular switching element. Other examples of types of data stored in the PNTD include error messages, log files, warning messages, and billing data.

The PNTD in some embodiments has a database query manager (not shown) that can process database queries, but as it is not a transactional database, this query manager cannot handle complex conditional transactional queries. In some embodiments, accesses to the PNTD are faster than accesses to the PTD but slower than accesses to the hash table.

Unlike the PNTD, the hash table is not a database that is stored on disk or other non-volatile memory. Instead, it is a storage structure that is stored in volatile system memory (e.g., RAM). It uses hashing techniques that use hashed indices to quickly identify records that are stored in the table. This structure combined with the hash table's placement in the system memory allows this table to be accessed very quickly. To facilitate this quick access, a simplified query interface is used in some embodiments. For instance, in some embodiments, the hash table has just two queries: a Put query for writing values to the table and a Get query for retrieving values from the table. Some embodiments use the hash table to store data that change quickly. Examples of such quick-changing data include network entity status, statistics, state, uptime, link arrangement, and packet handling information. Furthermore, in some embodiments, the integrated application uses the hash tables as a cache to store information that is repeatedly queried for, such as flow entries that will be written to multiple nodes. Some embodiments employ a hash structure in the NIB in order to quickly access records in the NIB. Accordingly, in some of these embodiments, the hash table is part of the NIB data structure.

The PTD and the PNTD improve the resiliency of the controller by preserving network data on hard disks. If a controller system fails, network configuration data will be preserved on disk in the PTD and log file information will be preserved on disk in the PNTD.

### I. Network Control System Hierarchy

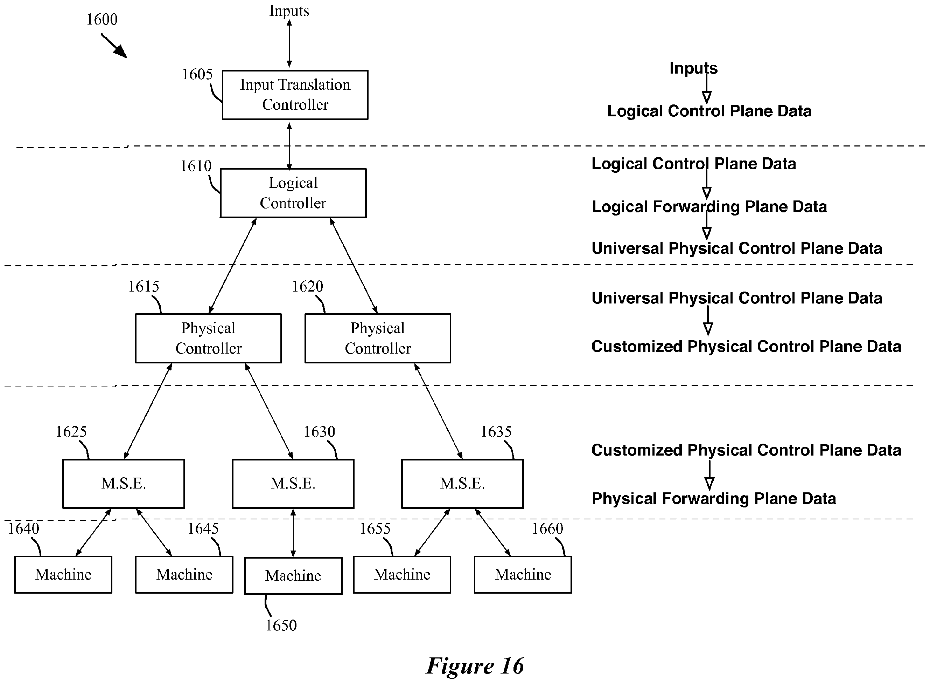

**Figure 16** conceptually illustrates an example architecture of a network control system 1600. In particular, this figure illustrates generation of CPCP data from inputs by different elements of the network control system. As shown, the network control system 1600 of some embodiments includes an input translation controller 1605, a logical controller 1610, physical controllers 1615 and 1620, and three managed switching elements 1625-1635. This figure also illustrates five machines 1640-1660 that are connected to the managed switching elements (written as "M.S.E." in the figure) 1625-1635 to exchange data between them. The specifics of architecture, such as the number of controllers in each layer in the hierarchy, the number of managed switching elements and machines, and the relationship between the controllers, managed switching elements, an machines, shown in this figure are for illustration only. One of the ordinary skill in the art will recognize that many other different combinations of the controllers, switching elements, and machines are possible for the network control system 1600.

In some embodiments, each of the controllers in a network control system has a full stack of different modules and interfaces described above by reference to **Figure 6**. However, each controller does not have to use all the modules and interfaces in order to perform the functionalities given for the controller. Alternatively, in some embodiments, a controller in the system has only those modules and interfaces that are necessary to perform the functionalities given for the controller. For instance, the logical controller 1610 which is a master of a LDPS does not include an input module (e.g., an input translation application) but does include the control module and the virtualization module (e.g., a control application or a virtualization application, or an integrated application) to generate UPCP data from the input LCP data.

Moreover, different combinations of different controllers may be running in a same machine. For instance, the input translation controller 1605 and the logical controller 1610 may run in the same computing device. Also, one controller may function differently for different LDP sets. For instance, a single controller may be a master of a first LDPS and a master of a managed switching element that implements a second LDPS.

The input translation controller 1605 includes an input translation application (not shown) that generates LCP data from the inputs received from the user that specify a particular LDPS. The input translation controller 1605 identifies, from the configuration data for the system 1605, the master of the LDPS. In this example, the master of the LDPS is the logical controller 1610. In some embodiments, more than one controller can be masters of the same LDPS. Also, one logical controller can be the master of more than one LDP sets.

The logical controller 1610 is responsible for the particular LDPS. The logical controller 1610 thus generates the UPCP data from the LCP data received from the input translation controller. Specifically, the control module (not shown) of the logical controller 1610 generates the LFP data from the received LCP data and the virtualization module (not shown) of the logical controller 1610 generates the UPCP data from the LFP data.

The logical controller 1610 identifies physical controllers that are masters of the managed switching elements that implement the LDPS. In this example, the logical controller 1610 identifies the physical controllers 1615 and 1620 because the managed switching elements 1625-1635 are configured to implement the LDPS in this example. The logical controller 1610 sends the generated UPCP data to the physical controllers 1615 and 1620.

Each of the physical controllers 1615 and 1620 can be a master of one or more managed switching elements. In this example, the physical controller 1615 is the master of two managed switching elements 1625 and 1630 and the physical controller 1620 is the master of the managed switching element 1635. As the master of a set of managed switching elements, the physical controllers of some embodiments generate, from the received UPCP data, CPCP data specific for each of the managed switching elements. Therefore, in this example, the physical controller 1615 generates the PCP data customized for each of the managed switching elements 1625 and 1630. The physical controller 1320 generates PCP data customized for the managed switching element 1635. The physical controllers send the CPCP data to the managed switching elements of which the controllers are masters. In some embodiments, multiple physical controllers can be the masters of the same managed switching elements.

In addition to sending CPCP data, the physical controllers of some embodiments receive data from the managed switching elements. For instance, a physical controller receives configuration information (e.g., identifiers of VIFs of a managed switching element) of the managed switching elements. The physical controller maintains the configuration information and also sends the information up to the logical controllers so that the logical controllers have the configuration information of the managed switching elements that implement the LDP sets of which the logical controllers are masters.

Each of the managed switching elements 1625-1635 generates physical forwarding plane data from the CPCP data that the managed switching element received. As mentioned above, the physical forwarding plane data defines the forwarding behavior of the managed switching element. In other words, the managed switching element populates its forwarding table using the CPCP data. The managed switching elements 1625-1635 forward data among the machines 1640-1660 according to the forwarding tables.

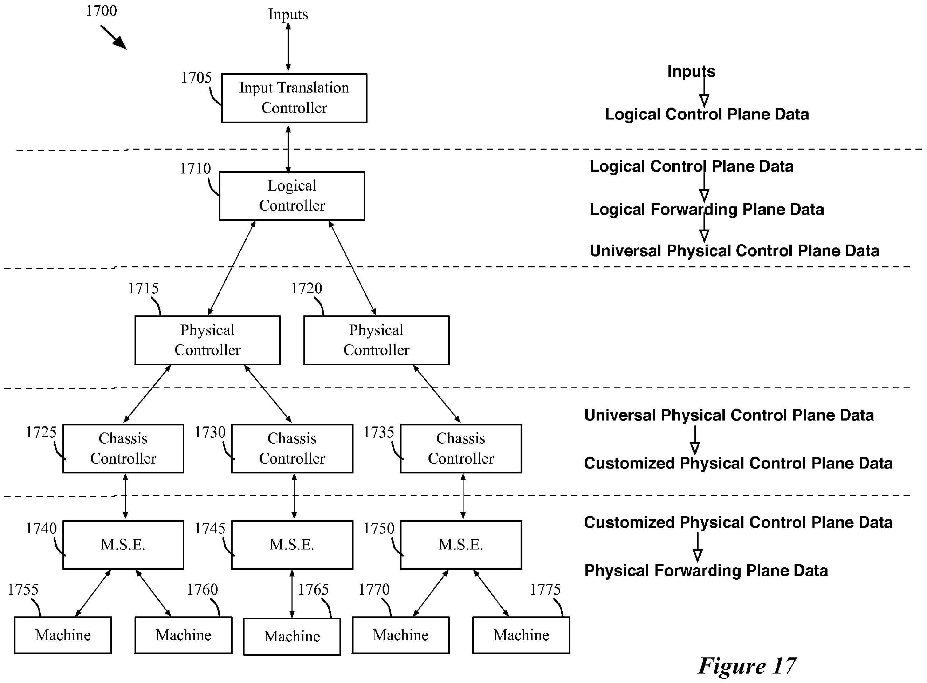

**Figure 17** conceptually illustrates an example architecture of a network control system 1700. Like **Figure 16**, this figure illustrates generation of CPCP data from inputs by different elements of the network control system. In contrast to the network control system 1600 in **Figure 16**, the network control system 1700 includes chassis controllers 1725-1735. As shown, the network control system 1700 of some embodiments includes an input translation controller 1705, a logical controller 1610, physical controllers 1715 and 1720, the chassis controllers 1725-1735, and three managed switching elements 1740-1750. This figure also illustrates five machines 1755-1775 that are connected to the managed switching elements 1740-1750 to exchange data between them. The specifics of architecture, such as the number of controllers in each layer in the hierarchy, the number of managed switching elements and machines, and the relationship between the controllers, managed switching elements, an machines, shown in this figure are for illustration only. One of the ordinary skill in the art will recognize that many other different combinations of the controllers, switching elements, and machines are possible for the network control system 1700.

The input translation controller 1705 is similar to the input translation controller 1605 in that the input translation controller 1705 includes an input translation application that generates LCP data from the inputs received from the user that specify a particular LDPS. The input translation controller 1705 identifies from the configuration data for the system 1705 the master of the LDPS. In this example, the master of the LDPS is the logical controller 1710.

The logical controller 1710 is similar to the logical controller 1610 in that the logical controller 1710 generates the UPCP data from the LCP data received from the input translation controller 1705. The logical controller 1710 identifies physical controllers that are masters of the managed switching elements that implement the LDPS. In this example, the logical controller 1710 identifies the physical controllers 1715 and 1720 because the managed switching elements 1740-1750 are configured to implement the LDPS in this example. The logical controller 1710 sends the generated UPCP data to the physical controllers 1715 and 1720.

Like the physical controllers 1615 and 1620, each of the physical controllers 1715 and 1720 can be a master of one or more managed switching elements. In this example, the physical controller 1715 is the master of two managed switching elements 1740 and 1745 and the physical controller 1730 is the master of the managed switching element 1750. However, the physical controllers 1715 and 1720 do not generate CPCP data for the managed switching elements 1740-1750. As a master of managed switching elements, the physical controller sends the UPCP data to the chassis controller that is responsible for each managed switching element of which the physical controller is the master. That is, the physical controller of some embodiments identifies the chassis controllers that interface the managed switching elements of which the physical controller is master. In some embodiments, the physical controller identifies those chassis controllers by determining whether the chassis controllers are subscribing to a channel of the physical controller.

A chassis controller of some embodiments has a one-to-one relationship with a managed switching element. The chassis controller receives UPCP data from the physical controller that is the master of the managed switching element and generates CPCP data specific for the managed switching element. An example architecture of a chassis controller will be described further below by reference to **Figure 18**. The chassis controller in some embodiments runs in the same machine in which the managed switching element that the chassis controller manages runs while in other embodiments the chassis controller and the managed switching element run in different machines. In this example, the chassis controller 1725 and the managed switching element 1740 run in the same computing device.

Like the managed switching elements 1625-1635, each of the managed switching elements 1740-1750 generates physical forwarding plane data from the CPCP data that the managed switching element received. The managed switching elements 1740-1750 populate their respective forwarding tables using the CPCP data. The managed switching elements 1740-1750 forward data among the machines 1755-1775 according to the flow tables.

As mentioned above, a managed switching element may implement more than one LDPS in some cases. In such cases, the physical controller that is the master of such a managed switching element receives UPCP data for each of the LDP sets. Thus, a physical controller in the network control system 1700 may be functioning as an aggregation point for relaying UPCP data for the different LDP sets for a particular managed switching element that implements the LDP sets to the chassis controllers.

Even though the chassis controllers illustrated in **Figure 17** are a level above the managed switching elements, the chassis controllers typically operate at the same level as the managed switching elements do because the chassis controllers of some embodiments within the managed switching elements or adjacent to the managed switching elements.

In some embodiments, a network control system can have a hybrid of the network control systems 1600 and 1700. That is, in this hybrid network control system, some of the physical controllers generate CPCP data for some of the managed switching elements and some of the physical controllers do not generate CPCP data for some of the managed switching elements. For the latter managed switching elements, the hybrid system has chassis controllers to generate the CPCP data.

As mentioned above, a chassis controller of some embodiments is a controller for managing a single managed switching element. A chassis controller of some embodiments does not have a full stack of different modules and interfaces described above by reference to **Figure 6**. One of the modules that a chassis controller does have is a chassis control application that generates CPCP data from UPCP data it receives from one or more physical controllers. **Figure 18** illustrates an example architecture for a chassis control application 1800. This application 1800 uses an nLog table mapping engine to map input tables that contain input data tuples that represent UPCP data to data tuples that represent the LFP data. This application 1800 manages the managed switching element 1885 in this example by exchanging data with the managed switching element 1885. In some embodiments, the application 1800 (i.e., the chassis controller) runs in the same machine in which the managed switching element 1885 is running.

As shown in **Figure 18**, the chassis control application 1800 includes a set of rule-engine input tables 1810, a set of function and constant tables 1815, an importer 1820, a rules engine 1825, a set of rule-engine output tables 1845, an exporter 1855, a managed switching element communication interface 1865, and a compiler 1835. This figure also illustrates a physical controller 1805 and a managed switching element 1885.

The compiler 1835 is similar to the compilers 1035 in **Figures 10**. In some embodiments, the rule-engine (RE) input tables 1810 include tables with UPCP data and/or switching configurations (e.g., access control list configurations, private virtual network configurations, port security configurations, etc.) that the physical controller 1805, which is master of the managed switching element 1885, sent to the chassis control application 1800. The input tables 1810 also include tables that contain physical data from the managed switching element 1885. In some embodiments, such physical data includes data regarding the managed switching element 1885 (e.g., CPCP data, physical forwarding data) and other data regarding the configuration of the managed switching element 1885.

The RE input tables 1810 are similar to the RE input tables 1010. The input tables 1810 are partially populated by the UPCP data provided by the physical controller 1805. The physical controller 1805 of some embodiments receives the UPCP data from one or more logical controllers (not shown).

In addition to the input tables 1810, the chassis control application 1800 includes other miscellaneous tables 1815 that the rules engine 1825 uses to gather inputs for its table mapping operations. These tables 1815 are similar to the tables 1015. As shown in **Figure 18**, the rules engine 1825 includes an event processor 1822, several query plans 1827, and a table processor 1830, which function similarly as the event processor 1022, the query plans 1027, and the table process 1030 do.

In some embodiments, the RE output tables 1845 store both logical and physical network element data attributes. The tables 1845 are called RE output tables as they store the output of the table mapping operations of the rules engine 1825. In some embodiments, the RE output tables can be grouped in several different categories. For instance, in some embodiments, these tables can be RE input tables and/or chassis-controller-application (CCA) output tables. A table is an RE input table when a change in the table causes the rules engine to detect an input event that requires the execution of a query plan. A RE output table 1845 can also be an RE input table 1810 that generates an event that causes the rules engine to perform another query plan after it is modified by the rules engine. Such an event is referred to as an internal input event, and it is to be contrasted with an external input event, which is an event that is caused by an RE input table modification made by the control application 1805 via the importer 1820. A table is a CCA output table when a change in the table causes the exporter 1855 to export a change to the managed switching elements or other controller instances.

The exporter 1855 detects changes to the CCA output tables of the RE output tables 1845. The exporter of different embodiments detects the occurrence of a CCA output table event differently. In some embodiments, the exporter registers for callbacks with the CCA output tables for notification of changes to the records of the CCA output tables. In such embodiments, the exporter 1855 detects an output table event when it receives notification from a CCA output table that one of its records has changed.

In response to a detected output table event, the exporter 1855 takes each modified data tuple in the modified output tables and propagates this modified data tuple to one or more of other controller instances (e.g., physical controller) or to the managed switching element 1885. The exporter 1855 uses an inter-controller communication interface (not shown) to send the modified data tuples to the other controller instances. The inter-controller communication interface establishes communication channels (e.g., an RPC channel) with other controller instances.

The exporter 1855 of some embodiments uses the managed switching element communication interface 1865 to send the modified data tuples to the managed switching element 1885. The managed switching element communication interface of some embodiments establishes two channels of communication. The managed switching element communication interface establishes a first of the two channels using a switching control protocol. One example of a switching control protocol is the OpenFlow protocol. The OpenFlow protocol, in some embodiments, is a communication protocol for controlling the forwarding plane (e.g., forwarding tables) of a switching element. For instance, the OpenFlow protocol provides commands for adding flow entries to, removing flow entries from, and modifying flow entries in the managed switching element 1885.

The managed switching element communication interface establishes a second of the two channels using a configuration protocol to send configuration information. In some embodiments, configuration information includes information for configuring the managed switching element 1885, such as information for configuring ingress ports, egress ports, QoS configurations for ports, etc.

The managed switching element communication interface 1865 receives updates in the managed switching element 1885 from the managed switching element 1885 over the two channels. The managed switching element 1885 of some embodiments sends updates to the chassis control application when there are changes with the flow entries or the configuration of the managed switching element 1885 not initiated by the chassis control application 1800. Examples of such changes include failure of a machine that was connected to a port of the managed switching element 1885, a VM migration to the managed switching element 1885, etc. The managed switching element communication interface 1865 sends the updates to the importer 1820, which will modify one or more input tables 1810. When there is output produced by the rules engine 1825 from these updates, the exporter 1855 will send this output to the physical controller 1805.

### J. Generating Flow Entries

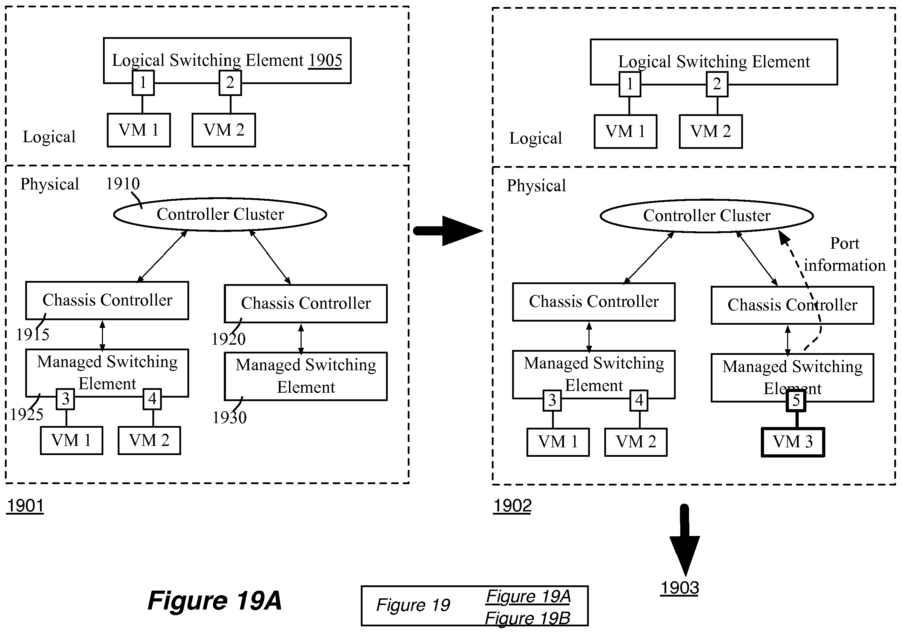

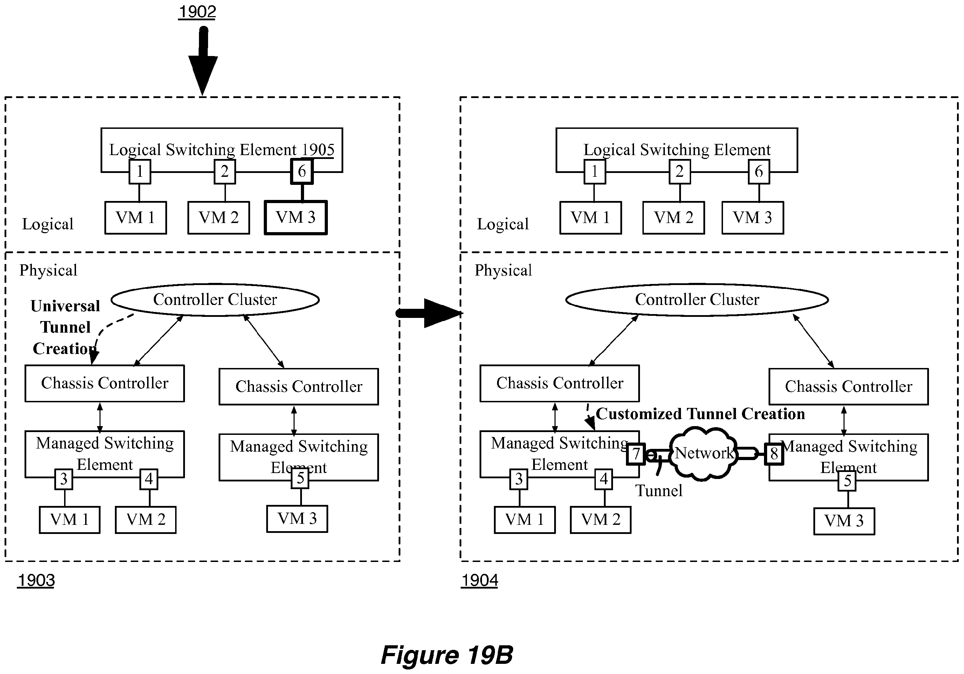

**Figure 19** illustrates an example creation of a tunnel between two managed switching elements based on UPCP data. Specifically, this figure illustrates in four different stages 1901-1904 a series of operations performed by different components of a network management system 1900 in order to establish a tunnel between two managed switching elements 1925 and 1930. This figure also illustrates a logical switching element 1905 and VMs 1 and 2. Each of the four stages 1901-1904 shows the network control system 1900 and the managed switching elements 1925 and 1930 in the bottom portion and a logical switching element 1905 and VMs connected to the logical switching element 1905 in the top portion. The VMs are shown in both the top and bottom portions of each stage.

As shown in the first stage 1901, the logical switching element 1905 forwards data between the VMs 1 and 2. Specifically, data comes to or from VM 1 through a logical port 1 of the logical switching element 1905 and data comes to or from VM 2 through a logical port 2 of the logical switching element 1905. The logical switching element 1905 is implemented by the managed switching element 1925 in this example. That is, the logical port 1 is mapped to port 3 of the managed switching element 1925 and the logical port 2 is mapped to port 4 of the managed switching element 1925.

The network control system 1900 in this example includes a controller cluster 1910 and two chassis controllers 1915 and 1920. The controller cluster 1910 includes input translation controllers (not shown), logical controllers (not shown), and physical controllers (not shown) that collectively generate UPCP data based on the inputs that the controller cluster 1910 receives. The chassis controllers receive the UPCP data and customize the universal data into PCP data that is specific to the managed switching element that each chassis controller is managing. The chassis controllers 1915 and 1920 pass the CPCP data to the managed switching elements 1925 and 1930, respectively, so that the managed switching elements 1925 and 1930 can generate physical forwarding plane data which the managed switching elements use to forward the data between the managed switching elements 1925 and 1930.

At the second stage 1902, an administrator of the network that includes managed switching element 1930 creates VM 3 in the host (not shown) in which the managed switching element 1930 runs. The administrator creates port 5 of the managed switching element 1930 and attaches VM 3 to the port. Upon creation of port 3, the managed switching element 1930 of some embodiments sends the information about the newly created port to the controller cluster 1910. In some embodiments, the information may include port number, network addresses (e.g., IP and MAC addresses), transport zone to which the managed switching element belongs, machine attached to the port, etc. As mentioned above, this configuration information goes through the chassis controller managing the managed switching element and then through physical controllers and logical controllers all the way up to the user that manages the logical switching element 1905. To this user, a new VM has become available to be added to the logical switching element 1905 that the user is managing.

At stage 1903, the user in this example decides to use VM 3 and attaches VM 3 to the logical switching element 1905. As a result, a logical port 6 of the logical switching element 1905 is created. Data coming to or from VM 3 therefore will go through the logical port 6. In some embodiments, the controller cluster 1910 directs all the managed switching elements that implement the logical switching element to create a tunnel between each pair of managed switching elements that has a pair of ports to which a pair of logical ports of the logical switching element are mapped. In this example, a tunnel can be established between managed switching elements 1925 and 1930 to facilitate data exchange between the logical port 1 and the logical port 6 (i.e., between VMs 1 and 3) and between the logical port 2 and the logical port 6 (i.e., between VMs 2 and 3). That is, data being exchanged between port 3 of the managed switching element 1925 and port 5 of the managed switching element 1930 and data being exchanged between port 4 of the managed switching element 1925 and port 5 of the managed switching element 1930 can go through the tunnel established between the managed switching elements 1925 and 1930.

A tunnel between two managed switching elements is not needed to facilitate data exchange between the logical port 1 and the logical port 2 (i.e., between VMs 1 and 2) because the logical port 1 and the logical port 2 are mapped onto two ports on the same managed switching element 1925.

The third stage 1903 further shows that the controller cluster 1910 sends UPCP data specifying instructions to create a tunnel from the managed switching element 1925 to the managed switching element 1930. In this example, the UPCP data is sent to the chassis controller 1915, which will customize the UPCP data to PCP data specific to the managed switching element 1925.

The fourth stage 1904 shows that the chassis controller 1915 sends the tunnel PCP data that specifies instructions to create a tunnel and to forward packets to the tunnel. The managed switching element 1925 creates a tunnel to the managed switching element 1930 based on the CPCP data. More specifically, the managed switching element 1925 creates port 7 and establishes a tunnel (e.g., GRE tunnel) to port 8 of the managed switching element 1930. More detailed operations to create a tunnel between two managed switching elements will be described below.

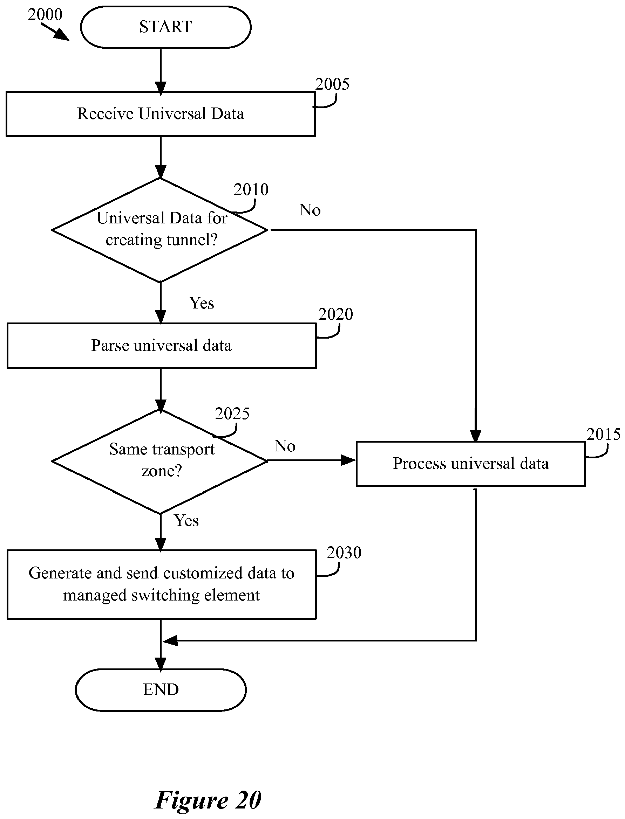

**Figure 20** conceptually illustrates a process 2000 that some embodiments perform to generate, from UPCP data, CPCP data that specifies the creation and use of a tunnel between two managed switching element elements. In some embodiments, the process 2000 is performed by a chassis controller that interfaces with a managed switching element or a physical controller that directly interfaces with a managed switching element.

The process 2000 begins by receiving UPCP data from a logical controller or a physical controller. In some embodiments, UPCP data have different types. One of the types of UPCP data is universal tunnel flow instructions, which specify creation of a tunnel in a managed switching element and the use of the tunnel. In some embodiments, the universal tunnel flow instructions include information about a port created in a managed switching element in a network. This port is a port of a managed switching element to which a user has mapped a logical port of the logical switching element. This port is also a destination port which the tunneled data needs to reach. The information about the port includes (1) a transport zone to which the managed switching element that has the port belongs, (2) a tunnel type, which, in some embodiments, is based on tunnel protocols (e.g., GRE, CAPWAP, etc.) used to build a tunnel to the managed switching element that has the destination port, and (3) a network address (e.g., IP address) of the managed switching element that has the destination port (e.g., IP address of a VIF that will function as one end of the tunnel to establish).

Next, the process 2000 determines (at 2010) whether the received UPCP data is a universal tunnel flow instruction. In some embodiments, the UPCP data specifies its type so that the process 2000 can determine the type of the received universal plane data. When the process 2000 determines (at 2010) that the received universal data is not a universal tunnel flow instruction, the process proceeds to 2015 to process the UPCP data to generate CPCP data and send the generated data to the managed switching element that the process 2000 is managing. The process 2000 then ends.

When the process 2000 determines (at 2010) that the received UPCP data is the universal tunnel flow instructions, the process 2000 proceeds to 2020 to parse the data to obtain the information about the destination port. The process 2000 then determines (at 2025) whether the managed switching element that has the destination port is in the same transport zone in which the managed switching element that has a source port is. The managed switching element that has the source port is the managed switching element that the chassis controller or the physical controller that performs the process 2000 manages. In some embodiments, a transport zone includes a group of machines that can communicate with each other without using a second-level managed switching element such as a pool node.

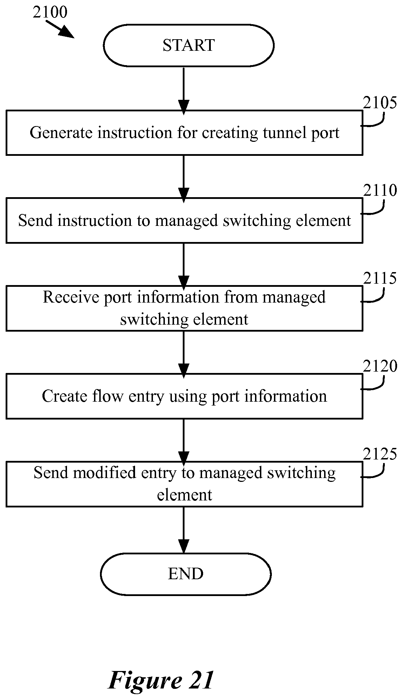

In some embodiments, the logical controller determines whether the managed switching element that has the destination port is in the same transport zone in which the managed switching element that has a source port is. The logical controller takes into account this determination in preparing the universal tunnel flow instructions to send (via a physical controller) to the chassis controller performing the process 2000. Specifically, the universal tunnel flow instructions will include different information for creating different tunnels. These different tunnel examples are described below after the description of **Figure 21**. In these embodiments, the process 2000 skips 2025 and proceeds to 2015.

When the process 2000 determines (at 2025) that the managed switching element with the source port and the managed switching element with the destination port are not in the same transport zone, the process 2000 proceeds to 2015, which is described above. Otherwise, the process proceeds to 2030 to customize the universal tunnel flow instructions and send the customized information to the managed switching element that has the source port. Customizing the universal tunnel flow instructions will be described in detail below. The process 2000 then ends.

**Figure 21** conceptually illustrates a process 2100 that some embodiments perform to generate customized tunnel flow instructions and to send the customized instructions to a managed switching element so that the managed switching element can create a tunnel and send the data to a destination through the tunnel. In some embodiments, the process 2100 is performed by a controller instance that interfaces with a managed switching element or a physical controller that directly interfaces with a managed switching element. The process 2100 in some embodiments starts when the controller that performs the process 2100 has received universal tunnel flow instructions, parsed the port information about the destination port, and determined that the managed switching element that has the destination port is in the same transport zone as the managed switching element that the controller manages.

The process 2100 begins by generating (at 2105) instructions for creating a tunnel port. In some embodiments, the process 2100 generates instructions for creating a tunnel port in the managed switching element that the controller manages based on the port information. The instructions include, for example, the type of tunnel to establish, and the IP address of the NIC which will be the destination end of the tunnel. The tunnel port of the managed switching element managed by the controller will be the other end of the tunnel.

Next, the process 2100 sends (at 2110) the generated instructions for creating the tunnel port to the managed switching element that the controller manages. As mentioned above, a chassis controller of some embodiments or a physical controller that directly interfaces with a managed switching element uses two channels to communicate with the managed switching element. One channel is a configuration channel to exchange configuration information with the managed switching element and the other channel is a switching element control channel (e.g., a channel established using OpenFlow protocol) for exchanging flow entries and event data with the managed switching element. In some embodiments, the process uses the configuration channel to send the generated instructions for creating the tunnel port to the managed switching element that the controller manages. Upon receiving the generated instructions, the managed switching element of some embodiments creates the tunnel port in the managed switching element and establishes a tunnel between the tunnel port and a port of the managed switching element that has the destination port using a tunnel protocol specified by the tunnel type. When the tunnel port and the tunnel are created and established, the managed switching element of some embodiments sends the value (e.g., four) of the identifier of the tunnel back to the controller instance.

The process 2100 of some embodiments then receives (at 2115) the value of the identifier of the tunnel port (e.g., "tunnel_port = 4") through the configuration channel. The process 2100 then modifies a flow entry that is included in the universal tunnel flow instructions using this received value. This flow entry, when sent to the managed switching element, causes the managed switching element to perform an action. However, being universal data, this flow entry identifies the tunnel port by a universal identifier (e.g., tunnel_port) and not by an actual port number. For instance, this flow entry in the received universal tunnel flow instructions may be "If destination=destination machine's UUID, send to tunnel_port." The process 2100 creates (at 2120) a flow entry with the value of the identifier of the tunnel port. Specifically, the process 2100 replaces the identifier for the tunnel port with the actual value of the identifier that identifies the created port. For instance, the modified flow entry would look like "If destination=destination machine's UUID, send to 4."

The process 2100 then sends (at 2125) this flow entry to the managed switching element. In some embodiments, the process sends this flow entry to the managed switching element over the switching element control channel (e.g., OpenFlow channel). The managed switching element will update its flow entries table using this flow entry. The managed switching element from then on forwards the data headed to a destination machine through the tunnel by sending the data to the tunnel port. The process then ends.

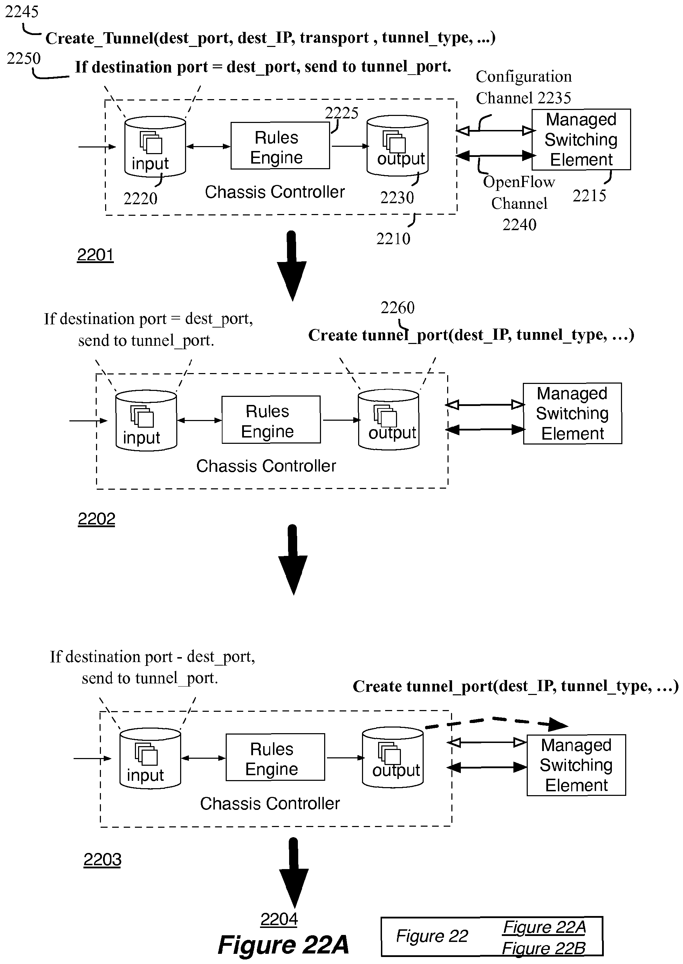

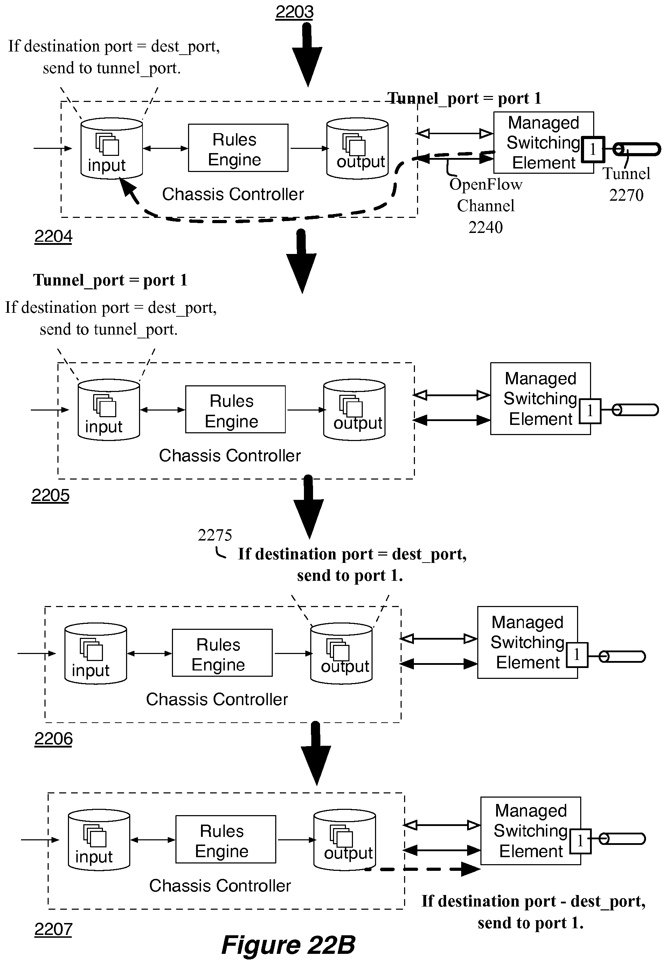

**Figure 22** conceptually illustrates in seven different stages 2201-2207 an example operation of a chassis controller 2210 that translates universal tunnel flow instructions into customized instructions for a managed switching element 2215 to receive and use. The chassis controller 2210 is similar to the chassis controller 1800 described above by reference to **Figure 18**. However, for simplicity of discussion, not all components of the chassis controller 2210 are shown in **Figure 22**.

As shown, the chassis controller 2210 includes input tables 2220, a rules engine 2225, and output tables 2230, which are similar to the input tables 1820, the rules engine 1825, and the output tables 1845. The chassis controller 2210 manages the managed switching element 2215. Two channels 2235 and 2240 are established between the chassis controller and the managed switching element 2215 in some embodiment. The channel 2235 is for exchanging configuration data (e.g., data about creating ports, current status of the ports, queues associated with the managed switching element, etc.). The channel 2240 is an OpenFlow channel (OpenFlow control channel) over which to exchange flow entries in some embodiments.

The first stage 2201 shows that the chassis controller 2210 has updated the input tables 2220 using universal tunnel flow instructions received from a physical controller (not shown). As shown, the universal tunnel flow instructions include an instruction 2245 for creating a tunnel and a flow entry 2250. As shown, the instruction 2245 includes the type of the tunnel to be created and the IP addresses of the managed switching element that has the destination port. The flow entry 2250 specifies the action to take in terms of universal data that is not specific to the managed switching element 2215. The rules engine performs table mapping operations onto the instruction 2245 and the flow entry 2250.

The second stage 2202 shows the result of the table mapping operations performed by the rules engine 2225. An instruction 2260 results from the instruction 2245. In some embodiments, the instructions 2245 and 2260 may be identical while they may not be in other embodiments. For instance, the values in the instructions 2245 and 2260 that represent the tunnel type may be differ. The instruction 2260 includes the IP address and the type of the tunnel to be created, among other information that may be included in the instruction 2260. The flow entry 2250 did not trigger any table mapping operation and thus remains in the input tables 2220.

The third stage 2203 shows that the instruction 2260 has been pushed to the managed switching element 2215 over the configuration channel 2235. The managed switching element 2215 creates a tunnel port and establishes a tunnel between the managed switching element 2215 and another managed switching element that has the destination port. One end of the tunnel is the tunnel port created and the other end of the tunnel is the port that is associated with the destination IP address in some embodiments. The managed switching element 2215 of some embodiments uses the protocol specified by the tunnel type to establish the tunnel.

The fourth stage 2204 shows that the managed switching element 2215 has created a tunnel port ("port 1" in this example) and a tunnel 2270. This stage also shows that the managed switching element sends back the actual value of the tunnel port identifier. The managed switching element 2215 sends this information over the OpenFlow channel 2240 in this example. The information goes into the input tables 2220 as input event data. The fifth stage 2205 shows that the input tables 2220 are updated with the information from the managed switching element 2215. This update triggers the rules engine 2225 to perform table mapping operations.

The sixth stage 2206 shows the result of the table mapping operations performed at the previous stage 2204. The output tables 2230 now has a flow entry 2275 that specifies the action to take in terms of information that is specific to the managed switching element 2215. Specifically, the flow entry 2275 specifies that when a packet's destination is the destination port, the managed switching element 2215 should sent out the packet through port 1. The seventh stage 2207 shows that the flow entry 2275 has been pushed to the managed switching element 2215, which will forward packets using the flow entry 2275.

It is to be noted that the instruction 2245 and the data exchanged between the chassis controller 2210 and the managed switching element 2215 as shown in **Figure 22** are conceptual representation of the universal tunnel flow instructions and the customized instructions and may not be in actual expressions and formats.

Moreover, the example of **Figure 22** is described in terms of the operation of the chassis controller 2210. This example is also applicable to a physical controller of some embodiments that translate UPCP data into CPCP data for the managed switching elements of which the physical controller is a master.

**Figures 19-22** illustrate a creation of a tunnel between two managed edge switching elements to facilitate data exchanges between a pair of machines (e.g., VMs) that are using two logical ports of a logical switching element. This tunnel covers one of the possible uses of a tunnel. Many other uses of a tunnel are possible in a network control system in some embodiments of the invention. Example uses of a tunnel include: (1) a tunnel between a managed edge switching element and a pool node, (2) a tunnel between two managed switching elements with one being an edge switching element and the other providing an L3 gateway service (i.e., a managed switching element that is connected to a router to get routing service at the network layer (L3)), and (3) a tunnel between two managed switching elements in which a logical port and another logical port that is attached to L2 gateway service.

A sequence of events for creating a tunnel in each of the three examples will now be described. For a tunnel between a managed switching element and a pool node, the pool node is first provisioned and then the managed switching element is provisioned. A VM gets connected to a port of the managed switching element. This VM is the first VM that is connected to the managed switching element. This VM is then bound to a logical port of a logical switching element by mapping the logical port to the port of the managed switching element. Once the mapping of the logical port to the port of the managed switching element is done, a logical controller sends (e.g., via physical controller(s)) universal tunnel flow instructions to the chassis controller (or, to the physical controller) that interfaces the managed switching element.

The chassis controller then instructs the managed switching element to create a tunnel to the pool node. Once the tunnel is created, another VM that is subsequently provisioned and connected to the managed switching element will share the same tunnel to exchange data with the pool node if this new VM is bound to a logical port of the same logical switching element. If the new node is bound to a logical port of a different logical switch, the logical controller will send the same universal tunnel flow instructions that were passed down when the first VM was connected to the managed switching element. However, the universal tunnel flow instructions will not cause to create a new tunnel to the pool node because, for example, a tunnel has already been created and operational.

If the established tunnel is a unidirectional tunnel, another unidirectional tunnel is established from the pool node side. When the logical port to which the first VM is bounded is mapped to the port of the managed switching element, the logical controller also sends universal tunnel flow instructions to the pool node. Based on the universal tunnel flow instructions, a chassis controller that interfaces the pool node will instruct the pool node to create a tunnel to the managed switching element.

For a tunnel between a managed edge switching element and a managed switching element providing L3 gateway service, it is assumed that a logical switching element with several VMs of a user have been provisioned and a logical router is implemented in a transport node that provides the L3 gateway service. A logical patch port is created in the logical switching element to link the logical router to the logical switching element. In some embodiments, an order in which the creation of the logical patch and provisioning of VMs do not make a difference to tunnel creation. The creation of the logical patch port causes a logical controller to send universal tunnel flow instructions to the chassis controllers (or, physical controllers) interfacing all the managed switching elements that implement the logical switching element (i.e., all the managed switching elements that each has at least one port to which a logical port of the logical switching element is mapped). Each chassis controller for each of these managed switching elements instructs the managed switching element to create a tunnel to the transport node. The managed switching elements each creates a tunnel to the transport node, resulting in as many tunnels as the number of the managed switching elements that implement the logical switching element.

If these tunnels are unidirectional, the transport node is to create a tunnel to each of the managed switching elements that implement the logical switching element. The logical switching element pushes universal tunnel flow instructions to the transport node when the logical patch port is created and connected to the logical router. A chassis controller interfacing the transport node instructs the transport node to create tunnels and the transport node creates tunnels to the managed switching elements.

In some embodiments, a tunnel established between two managed switching elements can be used for data exchange between any machine attached to one of the managed switching element and any machine attached to the other managed switching element, regardless of whether these two machines are using logical ports of the same logical switching element or of two different switching elements. That is one example case where tunneling enables different users that are managing different LDP sets to share the managed switching elements while being isolated.

A creation of a tunnel between two managed switching elements in which a logical port and another logical port that is attached to L2 gateway service starts when a logical port gets attached to L2 gateway service. The attachment causes the logical controller to send out universal tunnel flow instructions to all the managed switching elements that implement other logical ports of the logical switching element. Based on the instructions, tunnels are established from these managed switching elements to a managed switching element that implements the logical port attached to L2 gateway service.

### III. ELECTRONIC SYSTEM

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

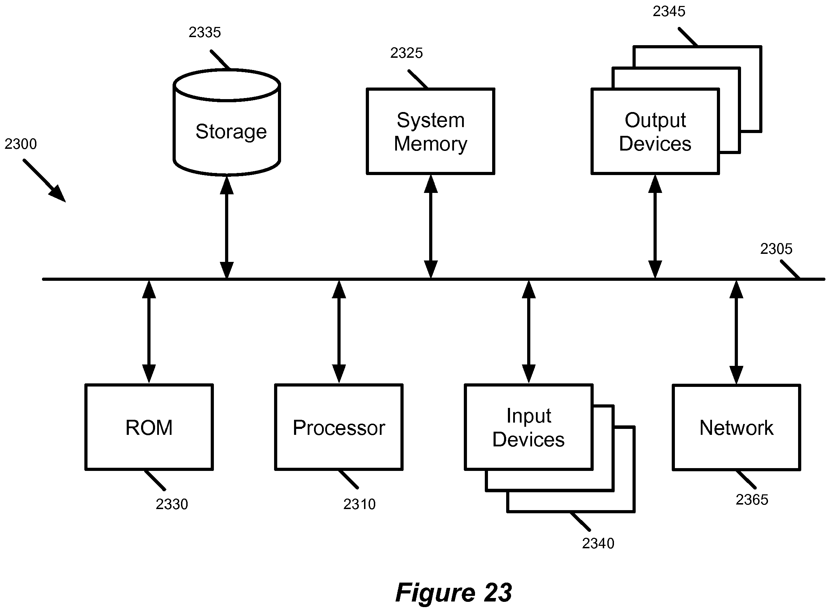

**Figure 23** conceptually illustrates an electronic system 2300 with which some embodiments of the invention are implemented. The electronic system 2300 can be used to execute any of the control, virtualization, or operating system applications described above. The electronic system 2300 may be a computer (e.g., a desktop computer, personal computer, tablet computer, server computer, mainframe, a blade computer etc.), phone, PDA, or any other sort of electronic device. Such an electronic system includes various types of computer readable media and interfaces for various other types of computer readable media. Electronic system 2300 includes a bus 2305, processing unit(s) 2310, a system memory 2325, a read-only memory 2330, a permanent storage device 2335, input devices 2340, and output devices 2345.

The bus 2305 collectively represents all system, peripheral, and chipset buses that communicatively connect the numerous internal devices of the electronic system 2300. For instance, the bus 2305 communicatively connects the processing unit(s) 2310 with the read-only memory 2330, the system memory 2325, and the permanent storage device 2335.

From these various memory units, the processing unit(s) 2310 retrieve instructions to execute and data to process in order to execute the processes of the invention. The processing unit(s) may be a single processor or a multi-core processor in different embodiments.

The read-only-memory (ROM) 2330 stores static data and instructions that are needed by the processing unit(s) 2310 and other modules of the electronic system. The permanent storage device 2335, on the other hand, is a read-and-write memory device. This device is a non-volatile memory unit that stores instructions and data even when the electronic system 2300 is off. Some embodiments of the invention use a mass-storage device (such as a magnetic or optical disk and its corresponding disk drive) as the permanent storage device 2335.

Other embodiments use a removable storage device (such as a floppy disk, flash drive, etc.) as the permanent storage device. Like the permanent storage device 2335, the system memory 2325 is a read-and-write memory device. However, unlike storage device 2335, the system memory is a volatile read-and-write memory, such a random access memory. The system memory stores some of the instructions and data that the processor needs at runtime. In some embodiments, the invention's processes are stored in the system memory 2325, the permanent storage device 2335, and/or the read-only memory 2330. From these various memory units, the processing unit(s) 2310 retrieve instructions to execute and data to process in order to execute the processes of some embodiments.

The bus 2305 also connects to the input and output devices 2340 and 2345. The input devices enable the user to communicate information and select commands to the electronic system. The input devices 2340 include alphanumeric keyboards and pointing devices (also called "cursor control devices"). The output devices 2345 display images generated by the electronic system. The output devices include printers and display devices, such as cathode ray tubes (CRT) or liquid crystal displays (LCD). Some embodiments include devices such as a touchscreen that function as both input and output devices.

Finally, as shown in **Figure 23****,** bus 2305 also couples electronic system 2300 to a network 2365 through a network adapter (not shown). In this manner, the computer can be a part of a network of computers (such as a local area network ("LAN"), a wide area network ("WAN"), or an Intranet, or a network of networks, such as the Internet. Any or all components of electronic system 2300 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray® discs, ultra density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral signals.

While the invention has been described with reference to numerous specific details, one of ordinary skill in the art will recognize that the invention can be embodied in other specific forms without departing from the spirit of the invention. In addition, a number of the figures (including **Figures 20** and **21**) conceptually illustrate processes. The specific operations of these processes may not be performed in the exact order shown and described. The specific operations may not be performed in one continuous series of operations, and different specific operations may be performed in different embodiments. Furthermore, the process could be implemented using several sub-processes, or as part of a larger macro process.

Also, several embodiments were described above in which a user provides LDP sets in terms of LCP data. In other embodiments, however, a user may provide LDP sets in terms of LFP data. In addition, several embodiments were described above in which a controller instance provides PCP data to a switching element in order to manage the switching element. In other embodiments, however, the controller instance may provide the switching element with physical forwarding plane data. In such embodiments, the relational database data structure would store physical forwarding plane data and the virtualization application would generate such data.

Furthermore, in several examples above, a user specifies one or more logical switching elements. In some embodiments, the user can provide physical switching element configurations along with such logic switching element configurations. Also, even though controller instances are described that in some embodiments are individually formed by several application layers that execute on one computing device, one of ordinary skill will realize that such instances are formed by dedicated computing devices or other machines in some embodiments that perform one or more layers of their operations.

Also, several examples described above show that a LDPS is associated with one user. One of the ordinary skill in the art will recognize that then a user may be associated with one or more sets of LDP sets in some embodiments. That is, the relationship between a LDPS and a user is not always a one-to-one relationship as a user may be associated with multiple LDP sets. Thus, one of ordinary skill in the art would understand that the invention is not to be limited by the foregoing illustrative details.

## Claims

1. A network control system (1700) for generating physical control plane data for managing a set of managed forwarding elements, wherein the system comprises:
a first controller instance (1710) for (i) receiving input data defining a logical datapath set and performing a first conversion of data for the logical datapath set to generate intermediate data tuples for the logical datapath set, and (ii) distributing the intermediate data tuples to a set of hosts on which a set of managed forwarding elements (1740-1750) operate, wherein the set of managed forwarding elements (1740-1750) is adapted to implement forwarding operations associated with the logical datapath set; and
a second controller instance (1725) operating on a particular one of the hosts on which a managed forwarding element (1740) also operates, the second controller instance (1725) for (i) receiving the intermediate data tuples for the logical datapath set and (ii) converting the intermediate data tuples into physical control plane data for use by the managed forwarding element (1740) operating on the particular host, wherein the second controller instance (1725) comprises a table mapping engine for mapping the intermediate data tuples to physical control plane data.

2. The network control system of claim 1, wherein the particular host is a first host and the managed forwarding element (1740) is a first managed forwarding element, the network control system (1700) further comprising a third controller instance (1735) operating on a second one of the hosts for (i) receiving the intermediate data tuples for the logical datapath set and (ii) converting the intermediate data tuples into physical control plane data for use by a second managed forwarding element (1750) operating on the second host.

3. The network control system of claim 2, wherein the physical control plane data for use by the first managed forwarding element (1740) operating on the first host comprises different data than the physical control plane data for use by the second managed forwarding element (1750) operating on the second host.

4. The network control system of claim 2 further comprising:
a fourth controller instance (1715) for receiving the intermediate data tuples from the first controller instance (1710) and distributing the intermediate data tuples to the second controller instance (1725); and
a fifth controller instance (1720) for receiving the intermediate data tuples from the first controller instance (1710) and distributing the intermediate data tuples to the third controller instance (1735).

5. The network control system of claim 4, wherein the first controller instance (1710) is a master controller instance for the logical datapath set, the fourth controller instance (1715) is a master controller instance for the first managed forwarding element (1740), and the fifth controller instance (1720) is a master controller instance for the second managed forwarding element (1750).

6. The network control system of claim 5 further comprising a coordination manager for identifying different controller instances as masters of different logical datapath sets and different managed forwarding elements.

7. The network control system of claim 1, wherein the input data is logical control plane data, the intermediate data tuples are universal physical control plane ('UPCP') data, and the physical control plane data for use by the managed forwarding elements (1740-1750) is customized physical control plane ('CPCP') data.

8. The network control system of claim 7, wherein the UPCP data comprises data tuples written in terms of generic expressions of an attribute of each of the set of managed forwarding elements (1740-1750), and the CPCP data comprises a customized expression of the attribute specific to the managed forwarding element (1740).

9. The network control system of claim 1, wherein a plurality of the managed forwarding elements (1740-1750) are software virtual switches.

10. The network control system of claim 1, wherein the intermediate data tuples are a first set of intermediate data tuples, wherein the first controller instance comprises:
a control application for converting the input data into a second set of intermediate data tuples for the logical datapath set; and
a virtualization application for converting the second set of intermediate data tuples into the first set of intermediate data tuples.

11. The network control system of claim 10, wherein the input data comprises logical control plane data, the second set of intermediate data tuples comprises logical forwarding plane data, the first set of intermediate data tuples comprises universal physical control plane data, and the physical control plane data for use by the managed forwarding elements (1740-1750) comprises customized physical control plane data.

12. The network control system of claim 1, wherein the intermediate data tuples define common forwarding behaviors of the set of managed forwarding elements (1740-1750) in order to implement a set of logical forwarding elements for the logical datapath set, wherein the set of logical forwarding elements logically connects a plurality of end machines (1755-1775) to each other.

13. The network control system of claim 1, wherein the second controller instance (1725) further comprises an interface for communicating with the managed forwarding element (1740) to distribute the physical control plane data to the managed forwarding element (1740) within the host.

14. The network control system of claim 13, wherein the interface is further for receiving managed forwarding element-specific data from the managed forwarding element (1740) in order to generate the output physical control plane data.

15. The network control system of claim 14, wherein the managed forwarding element-specific data comprises a physical port number.

## Patentansprüche

1. Netzsteuersystem (1700) zum Erzeugen von Physische-Steuerebene-Daten zum Verwalten eines Satzes verwalteter Weiterleitungselemente, wobei das System Folgendes umfasst:
eine erste Steuerungsinstanz (1710) zum (i) Empfangen von Eingangsdaten, die einen logischen Datenpfadsatz definieren, und Durchführen einer ersten Umwandlung von Daten für den logischen Datenpfadsatz, um Zwischendatentupel für den logischen Datenpfadsatz zu erzeugen, und (ii) Verteilen der Zwischendatentupel zu einem Satz von Hosts, auf dem ein Satz verwalteter Weiterleitungselemente (1740-1750) arbeitet, wobei der Satz verwalteter Weiterleitungselemente (1740-1750) zum Implementieren von Weiterleitungsoperationen ausgelegt ist, die mit dem logischen Datenpfadsatz assoziiert sind; und
eine zweite Steuerungsinstanz (1725), die auf einem bestimmten der Hosts arbeitet, auf dem auch ein verwaltetes Weiterleitungselement (1740) arbeitet, wobei die zweite Steuerungsinstanz (1725) zum (i) Empfangen der Zwischendatentupel für den logischen Datenpfadsatz und (ii) Umwandeln der Zwischendatentupel in Physische-Steuerebene-Daten zur Verwendung durch das verwaltete Weiterleitungselement (1740), das auf dem bestimmten Host arbeitet, ausgelegt ist, wobei die zweite Steuerungsinstanz (1725) eine Tabellenzuordnung-Engine zum Zuordnen der Zwischendatentupel zu Physische-Steuerebene-Daten umfasst.

2. Netzsteuersystem nach Anspruch 1, wobei der bestimmte Host ein erster Host ist und das verwaltete Weiterleitungselement (1740) ein erstes verwaltetes Weiterleitungselement ist, wobei das Netzsteuersystem (1700) ferner eine dritte Steuerungsinstanz (1735), die auf einem zweiten der Hosts arbeitet, zum (i) Empfangen der Zwischendatentupel für den logischen Datenpfadsatz und (ii) Umwandeln der Zwischendatentupel in Physische-Steuerebene-Daten zur Verwendung durch ein zweites verwaltetes Weiterleitungselement (1750), das auf dem zweiten Host arbeitet, umfasst.

3. Netzsteuersystem nach Anspruch 2, wobei die Physische-Steuerebene-Daten zur Verwendung durch das erste verwaltete Weiterleitungselement (1740), das auf dem ersten Host arbeitet, andere Daten als die Physische-Steuerebene-Daten zur Verwendung durch das zweite verwaltete Weiterleitungselement (1750), das auf dem zweiten Host arbeitet, umfassen.

4. Netzsteuersystem nach Anspruch 2, das ferner Folgendes umfasst:
eine vierte Steuerungsinstanz (1715) zum Empfangen der Zwischendatentupel von der ersten Steuerungsinstanz (1710) und Verteilen der Zwischendatentupel zu der zweiten Steuerungsinstanz (1725); und
eine fünfte Steuerungsinstanz (1720) zum Empfangen der Zwischendatentupel von der ersten Steuerungsinstanz (1710) und Verteilen der Zwischendatentupel zu der dritten Steuerungsinstanz (1735).

5. Netzsteuersystem nach Anspruch 4, wobei die erste Steuerungsinstanz (1710) eine Master-Steuerungsinstanz für den logischen Datenpfadsatz ist, die vierte Steuerungsinstanz (1715) eine Master-Steuerungsinstanz für das erste verwaltete Weiterleitungselement (1740) ist und die fünfte Steuerungsinstanz (1720) eine Master-Steuerungsinstanz für das zweite verwaltete Weiterleitungselement (1750) ist.

6. Netzsteuersystem nach Anspruch 5, das ferner einen Koordinationsverwalter zum Identifizieren unterschiedlicher Steuerungsinstanzen als Master unterschiedlicher logischer Datenpfadsätze und unterschiedlicher verwalteter Weiterleitungselemente umfasst.

7. Netzsteuersystem nach Anspruch 1, wobei die Eingangsdaten Logische-Steuerebene-Daten sind, die Zwischendatentupel universelle Physische-Steuerebene ("UPCP": Universal Physical Control Plane)-Daten sind und die Physische-Steuerebene-Daten zur Verwendung durch die verwalteten Weiterleitungselemente (1740-1750) angepasste Physische-Steuerebene("CPCP": Customized Physical Control Plane)-Daten sind.

8. Netzsteuersystem nach Anspruch 7, wobei die UPCP-Daten Datentupel umfassen, die in Form von generischen Ausdrücken eines Attributs von jedem des Satzes verwalteter Weiterleitungselemente (1740-1750) geschrieben sind, und die CPCP-Daten umfassen einen angepassten Ausdruck des Attributs, das spezifisch für das verwaltete Weiterleitungselement (1740) ist.

9. Netzsteuersystem nach Anspruch 1, wobei mehrere der verwalteten Weiterleitungselemente (1740-1750) virtuelle Software-Switches sind.

10. Netzsteuersystem nach Anspruch 1, wobei die Zwischendatentupel ein erster Satz von Zwischendatentupel sind, wobei die erste Steuerungsinstanz Folgendes umfasst:
eine Steueranwendung zum Umwandeln der Eingangsdaten in einen zweiten Satz von Zwischendatentupeln für den logischen Datenpfadsatz; und
eine Virtualisierungsanwendung zum Umwandeln des zweiten Satzes von Zwischendatentupeln in den ersten Satz von Zwischendatentupeln.

11. Netzsteuersystem nach Anspruch 10, wobei die Eingangsdaten Logische-Steuerebene-Daten umfassen, der zweite Satz von Zwischendatentupeln Logische-Weiterleitungsebene-Daten umfasst, der erste Satz von Zwischendatentupeln universelle Physische-Steuerebene-Daten umfasst und die Physische-Steuerebene-Daten zur Verwendung durch die verwalteten Weiterleitungselemente (1740-1750) angepasste Physische-Steuerebene-Daten umfassen.

12. Netzsteuersystem nach Anspruch 1, wobei die Zwischendatentupel gemeinsame Weiterleitungsverhalten des Satzes verwalteter Weiterleitungselemente (1740-1750) definieren, um einen Satz logischer Weiterleiterungselemente für den logischen Datenpfadsatz zu implementieren, wobei der Satz logischer Weiterleitungselemente mehrere Endmaschinen (1755-1775) logisch miteinander verbindet.

13. Netzsteuersystem nach Anspruch 1, wobei die zweite Steuerungsinstanz (1725) ferner eine Schnittstelle zum Kommunizieren mit dem verwalteten Weiterleitungselement (1740) umfasst, um die Physische-Steuerebene-Daten zu dem verwalteten Weiterleitungselement (1740) innerhalb des Hosts zu verteilen.

14. Netzsteuersystem nach Anspruch 13, wobei die Schnittstelle ferner zum Empfangen von Daten spezifisch für das verwaltete Weiterleitungselement von dem verwalteten Weiterleitungselement (1740) ausgelegt ist, um die Ausgang-Physische-Steuerebene-Daten zu erzeugen.

15. Netzsteuersystem nach Anspruch 14, wobei die Daten spezifisch für das verwaltete Weiterleitungselement eine Physischer-Port-Zahl umfassen.

## Revendications

1. Système de contrôle de réseau (1700) pour générer des données d'un plan de contrôle physique afin de gérer un ensemble d'éléments de transmission pris en gestion, dans lequel le système comprend :
une première instance de dispositif de contrôle (1710) pour (i) recevoir des données d'entrée définissant un ensemble de chemins de données logiques et effectuant une première conversion de données pour l'ensemble des chemins de données logiques afin de générer des groupes de n données intermédiaires pour l'ensemble des chemins de données logiques, et (ii) distribuer les groupes de n données intermédiaires à un ensemble d'hôtes sur lesquels est en fonction un ensemble d'éléments de transmission pris en gestion (1740-1750), dans lequel l'ensemble d'éléments de transmission pris en gestion (1740-1750) est agencé pour mettre en oeuvre des opérations de transmission associées à l'ensemble des chemins de données logiques ; et
une seconde instance de dispositif de contrôle (1725) fonctionnant sur un hôte particulier parmi les hôtes sur lesquels un élément de transmission pris en gestion (1740) est également en fonction, la seconde instance de dispositif de contrôle (1725) servant à (i) recevoir les groupes de n données intermédiaires pour l'ensemble des chemins de données logiques et (ii) convertir les groupes de n données intermédiaires en données du plan de contrôle physique destinées à être utilisées par l'élément de transmission pris en gestion (1740) en fonction sur l'hôte particulier, dans lequel la seconde instance de dispositif de contrôle (1725) comprend un moteur de correspondance de table pour faire correspondre les groupes de n données intermédiaires et les données du plan de contrôle physique.

2. Système de contrôle de réseau selon la revendication 1, dans lequel l'hôte particulier est un premier hôte et l'élément de transmission pris en gestion (1740) est un premier élément de transmission pris en gestion, le système de commande de réseau (1700) comprenant en outre une troisième instance de dispositif de contrôle (1735) en fonction sur un second des hôtes pour (i) recevoir les groupes de n données intermédiaires pour l'ensemble des chemins de données logiques et (ii) convertir les groupes de n données intermédiaires en données du plan de contrôle physique destinées à être utilisées par un second élément de transmission pris en gestion (1750) en fonction sur le second hôte.

3. Système de contrôle de réseau selon la revendication 2, dans lequel les données du plan de contrôle physique destinées à être utilisées par le premier élément de transmission pris en gestion (1740) en fonction sur le premier hôte comprennent des données différentes des données du plan de contrôle physique destinées à être utilisées par le second élément de transmission pris en gestion (1750) en fonction sur le second hôte.

4. Système de contrôle de réseau selon la revendication 2, comprenant en outre :
une quatrième instance de dispositif de contrôle (1715) pour recevoir les groupes de n données intermédiaires de la première instance de dispositif de contrôle (1710) et pour distribuer les groupes de n données intermédiaires à la seconde instance de dispositif de contrôle (1725) ; et
une cinquième instance de dispositif de contrôle (1720) pour recevoir les groupes de n données intermédiaires de la première instance de dispositif de contrôle (1710) et pour distribuer les groupes de n données intermédiaires à la troisième instance de dispositif de contrôle (1735).

5. Système de contrôle de réseau selon la revendication 4, dans lequel la première instance de dispositif de contrôle (1710) est une instance de dispositif de contrôle maître pour l'ensemble de chemins de données logiques, la quatrième instance de dispositif de contrôle (1715) est une instance de dispositif de contrôle maître pour le premier élément de transmission pris en gestion (1740) et la cinquième instance de dispositif de contrôle (1720) est une instance de dispositif de contrôle maître pour le second élément de transmission pris en gestion (1750).

6. Système de contrôle de réseau selon la revendication 5, comprenant en outre un gestionnaire de coordination pour identifier différentes instances de dispositif de contrôle en tant que maîtres de différents ensembles de chemins de données logiques et différents éléments de transmission pris en gestion.

7. Système de contrôle de réseau selon la revendication 1, dans lequel les données d'entrée sont des données du plan de contrôle logique, les groupes de n données intermédiaires sont des données du plan de contrôle physique universel («UPCP» - universal physical control plane), et les données du plan de contrôle physique destinées à être utilisées par les éléments de transmission pris en gestion (1740-1750) sont des données du plan de contrôle physique personnalisé («CPCP» - customized physical control plane).

8. Système de contrôle de réseau selon la revendication 7, dans lequel les données UPCP comprennent des groupes de n données écrits en termes d'expressions génériques d'un attribut de chacun de l'ensemble d'éléments de transmission pris en gestion (1740-1750), et les données CPCP comprennent une expression personnalisée de l'attribut spécifique à l'élément de transmission pris en gestion (1740).

9. Système de contrôle de réseau selon la revendication 1, dans lequel une pluralité des éléments de transmission pris en gestion (1740-1750) est constituée par des commutateurs virtuels du logiciel.

10. Système de contrôle de réseau selon la revendication 1, dans lequel les groupes de n données intermédiaires sont un premier ensemble de groupes de n données intermédiaires, dans lequel la première instance de dispositif de contrôle comprend :
une application de contrôle pour convertir les données d'entrée en un second ensemble de groupes de n données intermédiaires pour l'ensemble de chemins de données logiques ; et
une application de virtualisation pour convertir le second ensemble de groupes de n données intermédiaires en le premier ensemble de groupes de n données intermédiaires.

11. Système de contrôle de réseau selon la revendication 10, dans lequel les données d'entrée comprennent des données du plan de contrôle logique, le second ensemble de groupes de n données intermédiaires comprend des données du plan de transmission logique, le premier ensemble de groupes de n données intermédiaires comprend des données du plan de contrôle physique universel et les données du plan de contrôle physique destinées à être utilisées par les éléments de transmission pris en gestion (1740-1750) comprennent des données du plan de contrôle physique personnalisé.

12. Système de contrôle de réseau selon la revendication 1, dans lequel les groupes de n données intermédiaires définissent des comportements de transmission communs de l'ensemble d'éléments de transmission pris en gestion (1740-1750) afin de mettre en oeuvre un ensemble d'éléments de transmission logiques pour l'ensemble de chemins de données logiques, dans lequel l'ensemble d'éléments de transmission logiques connecte logiquement une pluralité de machines terminales (1755-1775) les unes aux autres.

13. Système de contrôle de réseau selon la revendication 1, dans lequel la seconde instance de dispositif de contrôle (1725) comprend en outre une interface pour communiquer avec l'élément de transmission pris en gestion (1740) afin de distribuer les données du plan de contrôle physique à l'élément de transmission pris en gestion (1740) au sein de l'hôte.

14. Système de contrôle de réseau selon la revendication 13, dans lequel l'interface est en outre destinée à recevoir des données spécifiques à l'élément de transmission pris en gestion provenant de l'élément de transmission pris en gestion (1740) afin de générer les données du plan de contrôle physique de sortie.

15. Système de contrôle de réseau selon la revendication 14, dans lequel les données spécifiques à l'élément de transmission pris en gestion comprennent un numéro de port physique.
